(19) Europäisches Patentamt / European Patent Office / Office européen des brevets

(11) **EP 2 890 084 B1**

(12) **EUROPEAN PATENT SPECIFICATION**

(45) Date of publication and mention
of the grant of the patent:
**18.04.2018 Bulletin 2018/16**

(51) Int Cl.:
*H04L 29/08* (2006.01)    *H04L 9/08* (2006.01)
*H04L 9/14* (2006.01)    *H04L 9/32* (2006.01)
*H04L 29/06* (2006.01)

(21) Application number: **13199901.3**

(22) Date of filing: **31.12.2013**

(54) **A DATA SECURING SYSTEM AND METHOD**

DATENSICHERUNGSSYSTEM UND -VERFAHREN

SYSTÈME DE SÉCURISATION DE DONNÉES ET PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.07.2015 Bulletin 2015/27**

(73) Proprietor: **THALES NEDERLAND B.V.
7550 GD Hengelo (NL)**

(72) Inventors:
 • **Iacob, Sorin M.
2628XH DELFT (NL)**
 • **Quillinan, Thomas
2628XH DELFT (NL)**

 • **Van Veelen, Bernard
2628XH DELFT (NL)**

(74) Representative: **Hnich-Gasri, Naïma et al
Marks & Clerk France
Immeuble Visium
22, avenue Aristide Briand
94117 Arcueil Cedex (FR)**

(56) References cited:
**US-A1- 2004 250 060**

 • **PAUL KOSTER ET AL: "Introduction of the
Domain Issuer in OMA DRM", CONSUMER
COMMUNICATIONS AND NETWORKING
CONFERENCE, 2007. CCNC 2007. 2007 4TH IEEE,
IEEE, PI, 1 January 2007 (2007-01-01), pages
940-944, XP031087921, ISBN: 978-1-4244-0667-8**

**Description**

**FIELD OF THE INVENTION**

The invention generally relates to data securing systems, and more particularly to a methods, systems and computer program products for securing distribution of data maintained in a shared data storage space by a set of connected nodes.

**BACKGROUND**

In complex organizations, such as non-hierarchical, distributed, or multi-organisational ad-hoc collaborations, there is a growing need for discriminatory access to information and resources. One of the most critical factors when distributing information between different parties is controlling when, where and to whom the information is passed. This especially occurs when dealing with security critical information that must be shared between parties while ensuring that the information is efficiently used. In existing solutions, a secure shared data space is thus provided to allow collaboration between parties while maintaining the confidentiality and integrity requirements of the users.

There exist several particular threats which are generally considered by data securing solutions when dealing with information sharing and analysis. These threats can be divided into two categories: data breach threats and threats to the data processing architecture. Furthermore, several types of security properties are also considered including authentication, authorization (access control), confidentiality, and the integrity of the data. For example, preserving the confidentiality of the data can depend on where the data processing occurs, such as on trusted hardware controlled by the owner of the data or on shared hardware. Different data securing solutions exist based on confidentiality aspect (as described for example in D.E. Bell and L.J. La Padula, Secure computer system: unified exposition and {MULTICS} Interpretation, The MITRE Corporation Technical report (ESD-TR-75-306), 1976), on Integrity aspect (as described for example in K.J. Biba, Integrity Considerations for Secure Computer Systems, The MITRE Corporation Technical report (ESD-TR-76-372), 1976) and on authorization aspect (as disclosed for example in R. S. Sandhu, E. J. Coyne, H. L. Feinstein and C. E. Youman, Role-Based Access Control Models, IEEE Computer, 29(2):38-47, February 1996). Such approach has been applied to the field of secure distributed computing (as described for instance in I. Foster and C. Kesselman, Globus: A Metacomputing Infrastructure Toolkit, The International Journal of Supercomputer Applications and High Performance Computing 11(2):115-128, Summer 1997). Other securing solutions have been described in US2004/250060 and in the article "Introduction of the Domain Issuer in OMA DRM", PAUL KOSTER ET AL, CONSUMER COMMUNICATIONS AND NETWORKING CONFERENCE, 2007, CCNC 2007, IEEE, 1 January 2007 (2007-01-01), pages 940-944, XP031087921,ISBN: 978-1-4244-0667-8.

One primary concern of existing data securing system is related to the fact that data should only be accessible to authorized users. However, by using traditional approaches to security, the requirements for sufficient security generally contradict the requirements for the data throughput. Obtaining flexible creation of information flows without compromising the security aspects accordingly appears as a key challenge for efficient data securing systems. Furthermore, data securing systems are faced with the necessity of protecting the resultant information once it has left the confines of the secure data processing centre. In particular, whenever information is processed and results are generated, these results can also be confidential.

More generally, there exist two main approaches for securing distributed data: a centralized approach and a decentralized approach. The centralized approach implies using a single trusted compute cluster (or Cloud provider) to store and process all of the data. While recent advances in homomorphic encryption show that it is theoretically possible to operate on encrypted data (C. Gentry, 2009, "Fully homomorphic encryption using ideal lattices", In Proc. of the 41st annual ACM symposium on Theory of computing (STOC '09). ACM, NY, NY, USA, 169-178), practical implementations of such algorithms are many years away. With the centralized approach, all data owners must trust the cloud provider with the entirety of their data. However, there are no technical guarantees that the cloud provider can be efficiently trusted.

The decentralized approach relies upon data owners providing access to their data only on information processing systems that are under their control. Instead of moving the data, code is migrated to these computer resources and executed. The primary threats in such systems are twofold: firstly, they are exposed to the danger of malicious code executing on trusted compute resources, and secondly they are exposed to the danger of leaking sensitive information out of the trusted system. Approaches for resolving these threats include :

- static analysis of third party code, as disclosed in N. Dragoni, F. Massacci, K. Naliuka and I. Siahaan, Security-by-Contract: Toward a Semantics for Digital Signatures on Mobile Code. Public Key Infrastructure. Springer Verlag LNCS 4582, 2007, 297-312, or
- reference monitoring inlining as disclosed in M. Dam, B. Jacobs, A. Lundblad and F. Piessens, Security Monitor Inlining for Multithreaded Java. ECOOP 2009 - Object-Oriented Programming. Springer Verlag, LNCS 5653, 2009, 546-569.

Furthermore, such a decentralized approach requires that the data contain a record of its past to allow the authorization mechanism to mediate access to it efficiently (as disclosed in A.R. Newman, "Confidence, pedigree, and security classification for improved data fusion", Information Fusion, 2002. Proceedings of the Fifth International Conference on, vol.2, no., pp. 1408- 1415 vol.2, 2002).

Distributing data between multiple parties in complex organisational structures requires the ability to carefully discriminate and manage access to the data. Conventional approaches are focused in either securing access to the system or securing access to the data stores.

More specifically, existing data security systems are generally based on discriminatory access control models which operate with categories for resources (objects), categories for users (subjects), and relations between these (e.g. access, read, write, edit, etc.).

Multi-level security (MLS) solutions are inspired from conventional classification of military documents in hierarchical categories, or security levels (e.g. "unclassified", "confidential", "secret", "top secret", etc.). Other applications require the use of unrelated (i.e. nonoverlapping) categories, such as "NATO-eyes only" or "EU-Citizen only", in a Multiple Independent Levels of Security (MILS) model. Either of these solutions can be implemented through different access control models, which specify different operations that subjects are allowed to perform on objects.

The implementations of policy evaluation and enforcement mechanisms for these access control models rely on the use of some trusted system components that evaluate the access requests issued by subjects and grant or deny access according to the policy specification. In case of MILS, the separation of the different security domains is ensured either by a so-called "air gap", which involves a complete physical separation of the hardware platforms on which the different security domains are hosted, through a trusted virtualization component (as described for example in Fraim, Lester J. "SCOMP: A solution to the multilevel security problem.", Computer 16, no. 7 (1983): 26-34), or using a separation kernel (Rushby, John M. "Design and verification of secure systems", In ACM SIGOPS Operating Systems Review, vol. 15, no. 5, pp. 12-21. ACM, 1981).

With such solutions, it is impossible to guarantee that unscrupulous users will not intentionally leak sensitive information. The data securing system simply keeps audit logs that allow post-facto investigations to identify such leaks and detect such fraudulent access.

MILS induces a partitioning of different security classes (SC) and clearance levels (CL). In contrast, MLS induces a total order on the clearance classes.

Different commercial-level implementations of secure operating systems or separation kernels are available that support the definition, evaluation, and enforcement of most of the above mentioned policies. However, the specific communication patterns and data flows required by the typical multiparty organisational domain scenarios cannot be fully supported by the current solutions.

## BRIEF SUMMARY OF THE INVENTION

In order to address these and other problems, there is provided a data securing system as defined in the appended independent claim 1, and a data securing system as defined in appended claim 17. Preferred embodiments are defined in the dependent claims.

The invention thus provides a secure access to data items.

The data securing method and system according to the invention has a number of advantages which include with no limitation the ability for data owners, rather than system owners, to control access to their information. This is particularly important in applications that require collaborative work practices and where asymmetries of trust exist. The invention also enables the owners of the data to manage access to the data.

Further advantages of the present invention will become clear to the skilled person upon examination of the drawings and detailed description.

## BRIEF DESCRIPTION OF THE DRAWINGS

Embodiments of the present invention will now be described by way of example with reference to the accompanying drawings in which like references denote similar elements, and in which:

Figure 1 shows the general architecture of a data securing system according to certain embodiments of the invention;

Figure 2 shows an exemplary architecture in which the data securing system can be implemented according to certain embodiments of the invention;

Figure 3 represents a publish-subscribe architecture, according to certain embodiments of the invention;

Figure 4 illustrates the registration of Publishers (PubID), Subscribers (SubID), and Data Objects (DOID), according to certain embodiments of the invention;

Figure 5 schematically represents an interaction model for data operations in a DDS, according to certain embodiments of the invention;

Figure 6 illustrates exemplary threats targeting system configuration data;

Figure 7 illustrates exemplary threats targeting data operations;

Figure 8A is a flowchart of the producing/consuming method, according to certain embodiments of the invention;

Figure 8B is a flowchart of the Revocation and Rekeying mechanism, according to certain embodiments of the invention;

Figure 9A illustrates the Consumer Registration Protocol, according to certain embodiments of the invention;

Figure 9B is a flowchart representing the Consumer Registration method, according to certain embodiments of the invention;

Figure 10A illustrates the Producer Registration Protocol, according to certain embodiments of the invention;

Figure 10B is a flowchart representing the Producer Registration method, according to certain embodiments of the invention;

Figure 11A illustrates the subscription Protocol, according to certain embodiments of the invention;

Figure 11B is a flowchart representing the subscription method, according to certain embodiments of the invention;

Figure 12 is a flowchart representing the publishing method, according to certain embodiments of the invention;

Figure 13 is a flowchart illustrating the Consumer Deregistration method, according to certain embodiments of the invention;

Figure 14 is a flowchart illustrating the Domain Information Update method, according to certain embodiments of the invention;

Figure 15 represents an exemplary MILS diagram combined with a MLS diagram, according to certain embodiments of the invention;

Figure 16 represents the Key hierarchy for a branch of the clearance hierarchy of figure 15; and

Figure 17 represents the Consumer registration protocol for MLS, according to certain embodiments of the invention.

It is noted that the drawings of the invention are not necessarily to scale. The drawings are merely schematic representations, not intended to portray specific parameters of the invention. The drawings are intended to depict only typical embodiments of the invention, and therefore should not be considered as limiting the scope of the invention.

## DETAILED DESCRIPTION

According to the various embodiments of the invention, there is proposed a data securing system for secure data distribution among a set of connected nodes sharing a common data storage space, where each node can store data in the form of data objects and control the access to the data associated to the node in the shared data space.

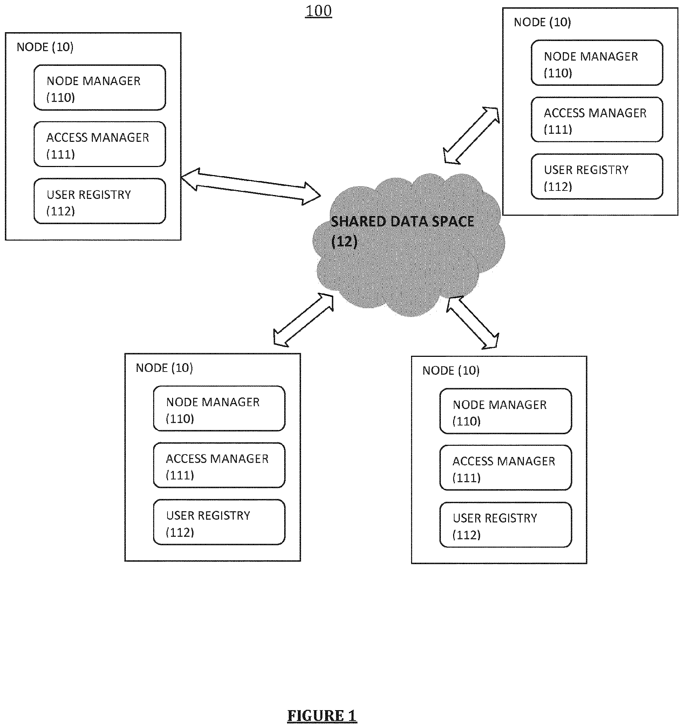

Figure 1 represents the general architecture of a data securing system 100 according to certain embodiments of the invention for use in a distributed computing system 10 comprising a set of nodes 10 sharing a shared data storage space 12 (also referred to as a "shared data space"). The nodes 10 are inter-connected by a communication network such as a local-area network or a wide-area network. Each node 10 belongs to a specific domain such as an independently administered organization within an enterprise, or a different branch of a company in a specific country. Each node 10 may include at least one processor including at least one hardware-based microprocessor and a memory coupled to the at least one processor. The memory may represent the random access memory (RAM) devices as well as any supplemental levels of memory, e.g., cache memories, non-volatile or backup memories (e.g., programmable or flash memories), read-only memories, etc.

The shared data space 12 can be used by the nodes 10 to store common data in the form of data objects. Thus, each node 10 stores a part of the content of the shared data space 12.

According to one aspect of the invention, each node comprises a Node Manager 110 (also referred to as a Domain Manager) for controlling access to the node's data stored in the shared data space 12.

The data securing system 100 thus comprises a plurality of Node Managers 110, each being associated with a respective node 10 and being configured to control access (read or write) to the data owned by the associated node 10 in the shared data space 12.

The Node Managers 110 provide the ability to perform authentication, authorization and non-repudiation within the data securing system 100.

Additionally, each Node Manager 110 may use an access control policy to determine if a specific entity should be granted access to the part of data created by the node in the shared data space 12 and/or to determine the types of access rights to grant as well as other access parameters (such as the duration of the access for example). Such access control mechanism can be dependent on the application domain.

Access to the shared data space 12 may be requested by a Data Consumer 24 (also referred to thereinafter as a "Data Consumer" or a "Consumer") to consume (or read) data from the node part of the shared data space 12, or by a Producer node 22 (also referred to thereinafter as a "Data Producer" or a "Producer") to produce (or write) new data in the domain owned by the node in the shared data space 12. To be able to access to the part of data owned by a given node 11 in the shared data space 12, a Data Producer 22 or a Data Consumer 24 is initially registered by the Node Manager 110 of the node 10. Further, a Data Consumer or Data Producer may require deregistration by the Node Manager 110 at any time to stop consuming or producing certain data from/in the node domain. The Node Manager 110 may be also configured to notify updates to the data owned by the node 10 in the shared data space 12 to Data Consumer or producers nodes.

According to one aspect of the invention, the Node Manager 110 may register a new Data Producer 22 and, control the production of data by the Data Producer 22 in the portion dedicated to the node in the shared data space 12 using a first key mechanism.

Further, the Node Manager 110 may register a new Data Consumer 24 and control the consumption of data from the portion dedicated to the node in the shared data space 12 by a Data Consumer 24 through a second key mechanism.

According to another aspect of the invention, the first key mechanism applied for the Data Consumers 24 is correlated to the second key mechanism applied to the Data Producers 22. In the following description, the first and second mechanisms will be also referred to simply as "key mechanisms".

More specifically, the key mechanisms are based on an initial relative trusting classification between the group of Data Consumers 24 and the group of Data Producers 22, a first group among the group of Data Consumers 24 and the Data Producers 22 being assigned a first level of trust while the other group (second group) is assigned a second level of trust. Based on this initial classification, a unique shared key (also referred to a "main key" or a "domain key") is generated for the first group (for example the group of Data Consumers 24) while a specific key derived from the shared key (also referred to thereinafter as a "derived key" or "auxiliary key") is generated for each member of the second group (for example the group of Data Producers 22).

The derived keys for each member of the second group may be determined using a secure cryptographic key derivation function such as KDF2 with SHA256 (KDF is the acronym for "Key Derivation Function" and SHA is the acronym for "Secure Hash Algorithm"). The key derivation function may take a source of information and use it to generate a cryptographic key in a predictable fashion. According to one aspect of the invention, a topic key joined with a producer's public key may be used as the information source to create a derived key using a key derivation function such as KDF2 with SHA256.

In particular, the first trusting level may be higher than the second trusting level, so that the first group can be qualified as a "trusted" group" while the second group can be qualified as untrusted group.

The data securing system 100 is thus adapted to manage an asymmetry of trust, and use derived keys to support such asymmetry.

According to one aspect of the invention, the data securing system 100 is configured to support the whole lifecycle of the cryptographic keys (shared key and derived keys), including key generation, transportation, storage, revocation and rekeying.

In one embodiment of the invention, the first group may comprise the group of Consumers and the second group comprising the group of Data Producers. The following description will be made with reference with such classification where the first group is trusted and formed by the group of Data Consumers 24 while the second group is untrusted and formed by the group of Data Producers for illustration purpose.

According to one aspect of the invention, each Data Producer 22 (untrusted group) is adapted to produce data types in the shared data space 12 by previously encrypting the data types with the derived key generated for said Data Producer and sending the encrypted data types to the Node Manager, the Node Manager 110 storing the encrypted data types in the shared data space 12.

Further each Data Consumer 24 (trusted group) is adapted to consume data types from the shared data space 12 by receiving said encrypted data types from the Node Manager 110, and decrypting the encrypted data types by deriving the derived key of the Data Producer 22 which produced the data types from the common shared key.

Shared keys and/or derived keys are used by the Node Manager 110 to control access by a member (22 or 24) of the first or second group to the part of data owned by the associated node 10, thereby ensuring secure and controlled data distribution.

In addition, each node 10 may comprise an Access Manager 111 (also referred to as an "Identity Manager") interacting with the Node Manager 110 and configured to check the identity (ID) of a Data Consumer 24 or a Data Producer 22 requesting an access to the shared data space 12 and to check the access rights of this Data Consumer or Data Producer to register, to produce or consume specific data (e.g. topics). Furthermore, when a key is rotated or revoked, or when Data Producers or Data Consumers request a shared or derived key for producing or consuming node data, the Access Manager 111 may be invoked to check if the permissions of the entity attempting the specified action conform to a predefined access control policy. The key rotation process designates a process used where a key expires in line with a policy, for example, after a period of time or a certain amount of data is encrypted with that key. Key rotation is functionally equivalent to revoking a key but takes place at predictable times. Key rotation may be used to strengthen the security of a system as it reduces the damage if a key is leaked or compromised. Any suitable access control system, such as capability based, attribute based (for example, XACML), role based (RBAC) or a Trust Management system such as KeyNote, SPKI etc. can be used to implement the Access Manager 111.

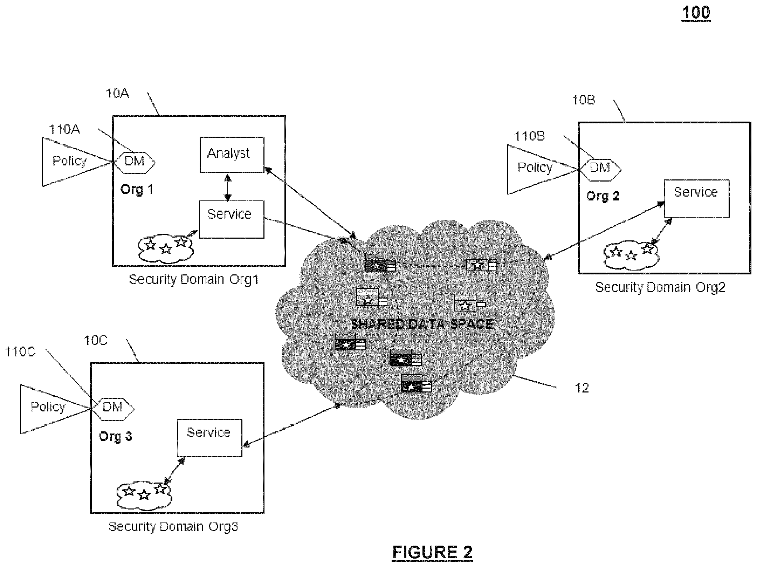

Figure 2 shows an exemplary implementation of the data securing system 100 in which the distributed computing system 10 comprises three nodes 10A, 10B, 10C corresponding to three respective application domains belonging to different organizations. Information stored in the shared data space 12 is controlled by the node 10A, 10B or 10C of the organisation that created it through its Node Manager 110A, 110B or 110C (also referred to as a "Domain Manager"). Each Domain Manager (DM) 110A, 110B or 110C is thus configured to control access by the other nodes (for example other organizations) to the data created by the associated node 10A, 10B or 10C in the shared data space 12. This allows the owner of the information stored in shared data space 12 to decide whether to allow or deny access to an associated node 10A, 10B or 10C based on the individual access control policy (policy) of the Node Manager (110A, 110B or 110C).

To facilitate the comprehension of the various embodiments of the invention, the following description will be made with references to nodes 10 corresponding respectively to different domains for illustrative purpose only. In the following description, the nodes 10 will thus be also referred to as "domains", and the "Node Manager" 110 will be referred to as a "Domain Manager".

In one embodiment of the invention, the data securing system 100 may use a publish-subscribe communication model and infrastructure to share information between the different nodes of the computing system 10. Such publish-subscribe infrastructure can still ensure the confidentiality of data transported.

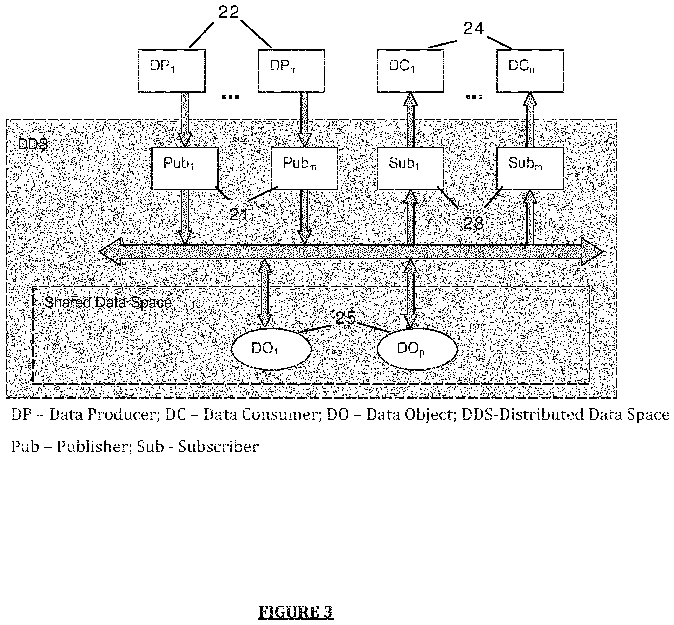

Figure 3 represents the Publish-Subscribe model used by the data securing system 100 according to certain embodiments of the invention. The Publish-Subscribe mechanism may be based for example on the Object Management Group (OMG) Data Distribution Service (DDS) Standard (for example Version 1.2, January 2007).

According to this Publish-Subscribe model, Data Producers 22 may publish data in the form of topics while Data Consumer 24 may subscribe to certain topics.

The DDS 12 comprises Publishers 21 and Subscribers 23. Interactions occur between Publishers 21 and Data Producers 22, and between Subscribers 23 and Data Consumers 24 for the registration and deregistration of Data Producers 22 and Data Consumers 24. Interactions also occur in the DDS 12 for the creation of data objects 25 by the Publishers 21 in the shared data space 12, and access to Data Objects 25 in the shared data space 12 for the Subscribers 23.

The Publish-Subscribe communication model allows connection of anonymous Data Producers 22 with Data Consumers 24. In the Publish-Subscribe communication model, Data Producers are known as publishers as they publish information to a data space. Data Consumers are similarly known as subscribers as they subscribe to the updates of publishers and this is how they consumer information. Even if the following description will be made with reference to a publish-subscribe model for illustrative purpose, the skilled person will readily understand that the invention is not limited to such communication model and that other communication models may be used.

Data Producers 22 can declare the topics on which they intend to publish data through the control of the Domain Manager 110.

The Publishers 21 represents the objects responsible for data issuance. A Publisher may publish data of different data types if publishing is allowed by the Domain Manager 110.

More specifically, the Domain Manager 110 associated with a given domain 10 may be configured to initially register a new Data Producer 22 and provide a key (derived key specific to that Data Producer 22) to the Data Producer if the registration is successful. The Data Producer 22 can subsequently publish topics in the portion associated with that domain in the shared data space 12 using the key. Then, each time the Data Producer request publishing of new data in the shared data space 12, the Domain Manager 110 will control the access of the Data Producer 22 based on the key mechanism.

A Subscriber 23 may receive published data and make it available to the Data Consumer 24. A Subscriber 23 may receive and dispatch data of different specified types.

The Domain Manager 110 is configured to initially register a new Data Consumer 24. The Data Consumer 24 may then request subscription to data (e.g. topics) to the Domain Manager using a direct authenticated and encrypted connection. The Domain Manager 110 then controls the access by the Data Consumer 24 through the key mechanism.

Accordingly, when a Data Producer 22 publishes some data on a topic through a Publisher 21, all the Data Consumers subscribing to that topic have the ability to receive it, subject to the control of the Domain Manager 110. The Data Producers and Data Consumers can remain anonymous, resulting in a loose coupling.

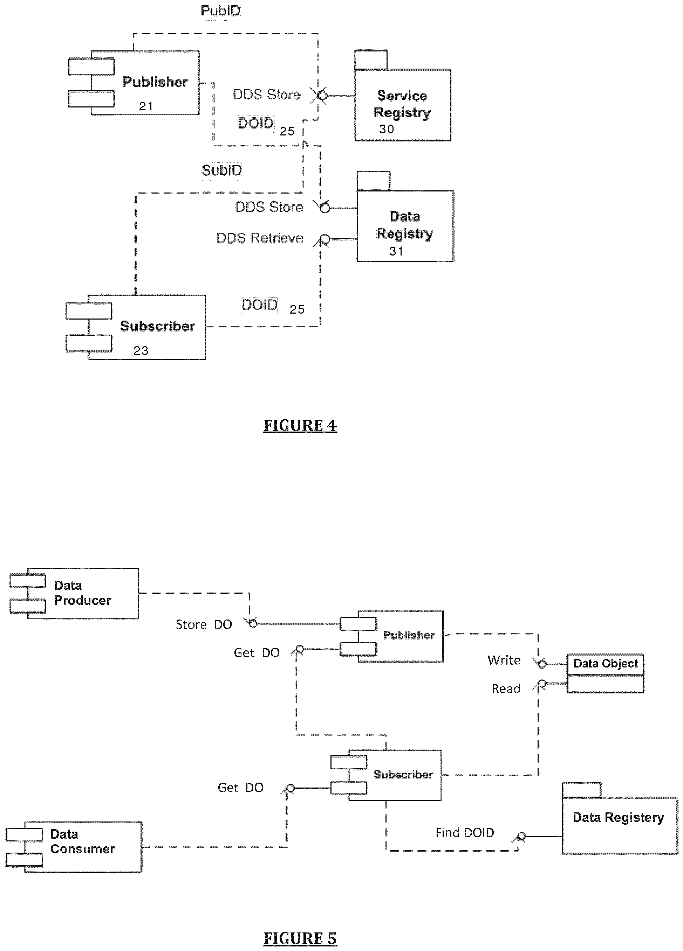

Figure 4 represents the interaction models involving the Publishers 21, the Subscribers 23, and the data objects 25 in the shared data space 12. In Figure 4, the Publishers 21 are also referred as "PubID", the Subscribers 23 are also referred as SubID, and the Data Objects 25 are also referred as DOID.

Although not shown in Figure 4, it should be noted additional data structures may be used that in the registration process for different instantiations of the DDS 12, besides the identifiers (IDs), such as data object/client resource locators, and metadata structure IDs.

Figure 4 shows a standard data distribution system with a Service Registry 30 that holds the list of publisher identifiers (PubID) and subscriber identifiers (SubID). The Data Registry 31 holds the Data Object Identifier (DOID) objects that refer to each encrypted data item. The Service Registry 30 may be used to store publisher or subscriber identifiers along with the topics that they are publishing, or subscribing, respectively. This registry may be used by the DDS to manage the flow of data objects from producers to subscribers. Publishers may store DOID objects in the Data Registry, Subscribers retrieve these objects.

Figure 5 represents the interaction model for data operations in the DDS 12, according to certain embodiments of the invention. As shown, the Data Producer uses the Publisher interface to store Data objects (DO). The Data Consumer uses the Subscriber interface to get these data objects. In such embodiments, the Domain Manager 110 has no involvement with this process as the Data Producer and the Data Consumer use the Domain Manager 110 to retrieve the encryption keys before the Data Object is stored or retrieved respectively. Unlike existing interaction models, the Data Object may be encrypted before being stored by the Data Producer, and decrypted after being retrieved by the Data Consumer.

Exemplary vulnerabilities related to the registration process and persistent configuration data may include claimed identity of the client process, and integrity of data and client IDs (and related information).

Vulnerabilities related to certain data operations may include :

- access to data stores; or
- access to communication media.

The data securing system 100 according to the invention is configured to manage a number of the potential threats resulting from such vulnerability points.

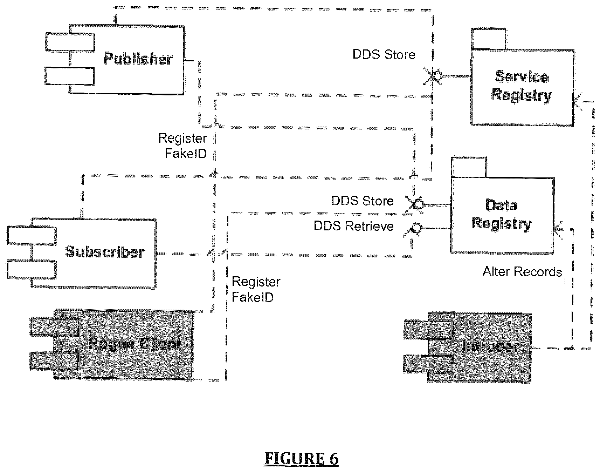

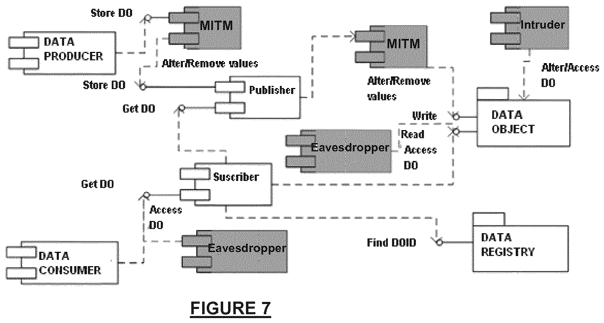

Figures 6 and 7 represent exemplary threats which may target the data distribution within the distributed computing system 100.

One type of vulnerability which can affect the distributed computing system 100 may be related to the identity of users. This first type of vulnerability can result in the following threat: Rogue users may try to register through internally defined (DDS) functions. Therefore, this involves a risk that rogue clients be registered in the DDS. The data securing system 100 is configured to use reciprocally verifiable identity tokens to overcome such threat.

Another type of vulnerability which can affect the distributed computing system 100 may be related to the access to registry data (IDs) and data values. This type of vulnerability can result in the following threats:

- use of internally defined functions by legitimate users involving a risk that configuration records be inadvertently altered;

- Use of externally defined functions (DBMS, OS, transport protocols, etc.) by intruders involving a risk that persistent data be altered.

The data securing system 100 overcomes these threats by providing access control mechanisms and use of integrity checksums, fingerprinting, MAC, or signatures.

Still another type of vulnerability which can affect the distributed computing system 10 may be related to the access to Data Objects' values which can result in the following threats:- Man-In-The-Middle (MITM) attack 70 at Data Producers 22 and Publishers 21 by making use of internally defined functionality, which may result in alteration of data values;- Eavesdropper 71 making use of internally defined functionality which may alter the confidentiality of data values;- Use of externally defined functions (DBMS, OS, transport protocols, etc.) by eavesdroppers 72 which may alter the confidentiality of data values.The data securing system 100 overcomes these threats by providing access control mechanisms and use of a key mechanism to encrypt data. In one embodiment of the invention, the entrusting capability between the group of Data Producers 22 and the group of Subscribers 23 can be such that the Data Consumers 24 are qualified as trustworthy (i.e. fully trusted to manage information in a domain) while the Data Producers 22 are qualified as untrustworthy. Such asymmetry of trust can be used for example when Data Producers 24 are represented by sensors which are in the field (and hence potential sources of leaks) or potentially limited in computational capabilities. Alternatively, the asymmetry could be in the other direction, where Data Producers 22 are trustworthy and Data Consumers 24 are untrustworthy.

The following description will be made with reference to a trusting classification where the Data Consumers 23 are trusted while the Data Producers 22 are not trusted, for illustrative purpose only.

According to another aspect of the invention, information stored in the shared data space 12 may be cryptographically encoded to ensure confidentiality using the shared keys and the derived keys. The data securing system 100 manages the set of keys (shared and derived keys) for encoding data, using a key hierarchy. More specifically, the shared set of keys maintained by each domain 10 comprises one key for each topic (or "domain-topic") supported by the associated domain 10. When a Data Consumer 24 (belonging to the trustworthy group in the considered example) is successfully authorised to subscribe to a given domain-topic of the domain 10, the Data Consumer 24 may receive the topic key associated with the domain-topic from the Domain Manager 110.

In contrast, each member of the group that is untrustworthy, i.e. the Data Producers 22 in the considered example, receive instead, for each topic, an auxiliary key that is derived from the topic key associated with the topic, but that is unique to each Data Producer 22. Each Data Producer 22 can then encrypt the data using the auxiliary key. Data Consumers 24 can derive the auxiliary key based on a Data Producer Identifier.

Standard cryptographic mechanisms can be used, such as SSL/TLS or Kerberos, to provide communication security. Such mechanisms are used to encrypt and authenticate the communication of keys between the Domain Manager 110 and the Data Producer 22 or Data Consumer 24.

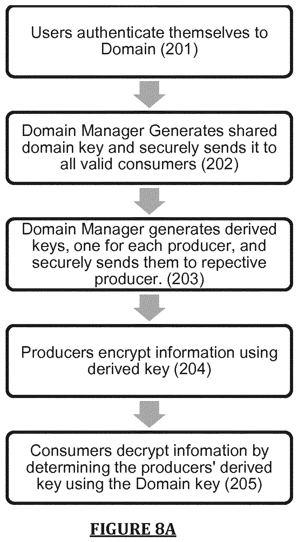

Figure 8A is a general flowchart of the main steps of the Data Consumer/Data Producer registration method according to certain embodiments of the invention.

In step 200, Data Producers 22 or Data Consumers 24 authenticate themselves to a given domain 10 managed by a Domain Manager 110. In step 200, the access requests from the producers and Data Consumers may be logged. These logs may be created and stored by each Domain Manager 110 and can take the form of the following sequence: [TIME] [ACTION] [DATA DOMAIN] [DATA TOPIC] [PRINCIPAL INVOLVED] [AUTHORIZATION PROVIDED]. The [ACTION] may be one of Publish or Subscribe. The [PRINCIPAL INVOLVED] designates the authenticated identity of the requestor. The [AUTHORIZATION PROVIDED] designates the set of authorization tokens that were provided by the requestor.

In step 201, the Domain Manager 110 generates a shared domain key (when there is only one shared key per Domain Manager 110) or multiple shared "topic keys" (where more than one shared key is used in a domain). A topic key represents a unique key per information topic. The Domain Manager 110 then securely sends this shared domain/topic key to all Data Consumers 24 that are authorized by the policy of the Domain Manager 110 to consumer data in that Domain and Topic. This shared topic key may be generated by using a secure random number generator and a key generator for the chosen data encryption algorithm. Whenever a new Data Consumer 24 registers for the specific topic, the Domain Manager may send this key to the Data Consumer 24. By using a shared topic key, the number of keys that each Data Consumer must know is limited to one per topic in each domain. This reduces the key management overhead. Furthermore, as Data Producers 22 do not receive the shared key but a unique derived key instead, they cannot decrypt data objects produced by other Data Producers 22. As the derived keys are generated using a standard Key Derivation Function, such as KDF2, based on both the shared topic key and data that is publically available about each Data Producer 22, for example information that is provided unencrypted along with each data object, Data Consumers 24 can also derive these keys from the topic key.

In step 202, the Domain Manager 110 generates derived keys, each being unique to each Data Producer 22 and Topic, and securely sends them to the corresponding Data Producer 22. The derived keys may be generated using a standard Key Derivation Function, such as KDF2 (ISO 18033-2), MGF1 (PKCS1-v2), PBKDF2 (PKCS5-v2), etc.

In phase 203, the Data Producers 22 encrypt information using the derived key obtained from the Domain Manager 110 before publishing it, while the Data Consumers 24 decrypt the information they receive by deriving the producers' derived key.

The skilled person will readily understand that new Data Consumers 24 and new Data Producers 22 can request authentication by the Domain Manager 110, at any time during or after step 202. The shared domain key is thus sent to each new Data Consumer 24 registered by the Domain Manager 110. Similarly, a derived key can be generated for each new Data Producer 22 registered by the Domain Manager110 during or after step 202.

According to another aspect of the invention, the data securing system 100 may revoke the keys in response to the detection of a misuse of a key and/or periodically generate new keys to improve the security of the system.

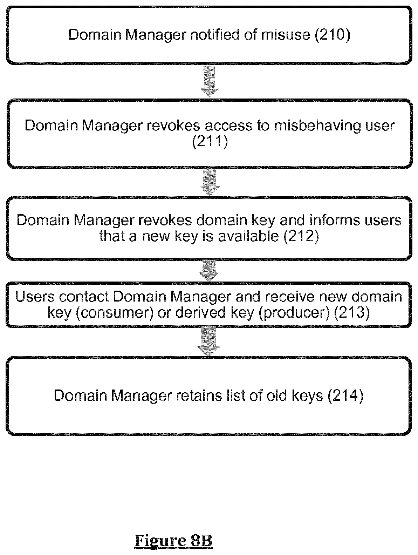

Figure 8B is a general flowchart representing the key revocation method according to certain embodiments of the invention.

In step 210, the Domain Manager 110 detects a misuse of a given key either through auditing or through an external notification from a user of the system. For example, an automatic audit of the system could detect specific data consumers rapidly requesting frequent topic key rotations (in order to produce a denial of service). In such a case, a policy could be enforced that only a specific number of key rotations are allowed by users over a period of time. Once this limit has been exceeded, the Domain Manager 110 would determine that misuse has taken place and revokes access to that Data Consumer.

In step 211, the Domain Manager 110 revokes access to the user (Data Consumer or Data Producer) identified as responsible for the misuse. The Domain Manager may revoke access to the user using a different revoking mechanism depending on whether the user is a Data Consumer or a Data Producer. In one embodiment of the invention, the Domain Manager 110 may revoke a user by first adding the user identifier to an internal list of revoked users. Next the Domain Manager 110 goes through its list of topics and determines the topics that the user was subscribed to or publishing to. For each of these topics, the Domain Manager 110 may then remove the user from the list of users and use the key rotation mechanism to force the topic key to be changed. This explicitly causes the revoked user to lose access to the topic.

In particular, the revoked access list holding users who have been banned by the Domain Manager 110 can retain a user until the user access credential expires. At that point, as their access credential, for example an X.509 certificate, is no longer valid for in the system, a regular cleanup of the revoked list can be then performed.

In step 212, the Domain Manager 110 revokes the shared Topic key and informs Data Producers 22 and Data Consumers 24 that are publishing or subscribing to the topic that a new key is available. Once a topic key has been changed the associate derived keys must also be regenerated.

In step 213, the Data Consumers and Data Producers then contact the Domain Manager110 and receive a new domain key (Data Consumers) or a derived key (Data Producers).

The Domain Manager 110 may retain a list of previous keys that have been revoked. Data Producers 22 and Data Consumers 24 can then request a previous key if they need to access old data. This can be used to prevent new Data Consumers 24 from accessing to old data as well as to allow for limited access to specific Data Consumers 24 where a new key is created and the old one is not provided to the specific Data Consumer 24. This key can then be changed again once the access period of the Data Consumer 24 has elapsed. The Data Producer 22 can also choose to republish old data to make it available for new consumers...

By keeping audit logs of all interactions with the system, repudiation of actions may be prevented.

The shared data space 12 storing the shared data may be cleaned up periodically to remove old data and associated keys.

According to another aspect of the invention, periodic rekeying can be performed according to step 210, and 212 to 213 to periodically regenerate the domain/topic keys and the derived keys. Rekeying makes it possible to optimally manage the use of cryptographic keys and prevent the use of a same key for long periods or large volumes of data. This reduces the adverse effects in the case of the compromise of a key. In addition, rekeying decisions can be logged to monitor any abuse that may occur, for example in the case of malicious users attempting to deny access to the Domain Manager 110.

According to another aspect of the invention, once access rights have been determined, a number of processes can be used to manage the keys. The data securing system 100 may use several protocols to manage the symmetric keys (shared key and derived keys). These protocols can be used for registration of users, for data publishing, for data subscribing and for data updating.

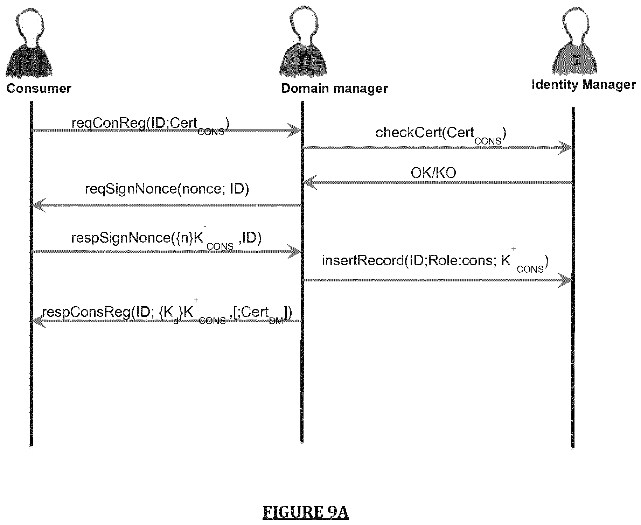

Figure 9A is a sequential diagram showing the messages exchanged for Data Consumer registration, according to the Data Consumer registration protocol.

The protocol for Data Consumer registration may be implemented between the Domain Manager 110, the Access Manager 111 and a given Data Consumer 24 to register the Data Consumer 24.

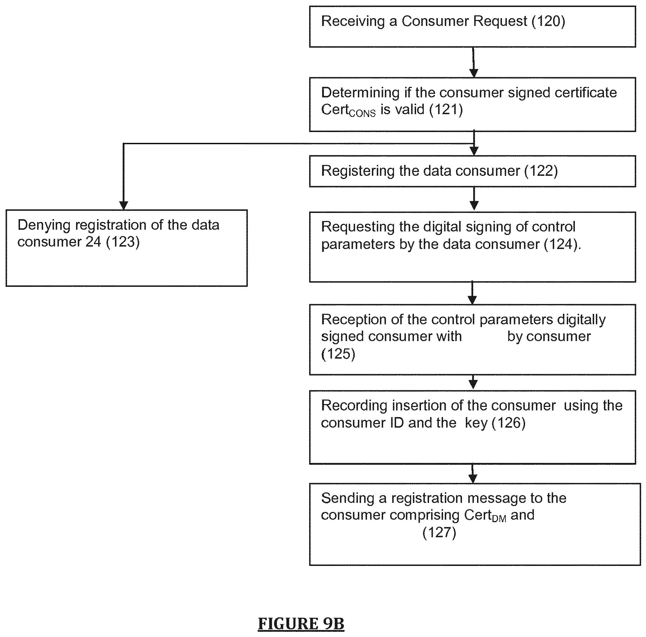

Figure 9B is a flowchart of the Data Consumer registration method corresponding to the communication protocol of figure 9A.

The following description of the Data Consumer registration method will be made with reference to Figure 9B, conjointly with Figure 9A.

In a first step 120, a Data Consumer registration request "reqConsReg(ID, Cert$_{CONS}$)" is received from a Data Consumer 24 associated with a Data Consumer Identifier ID and a signed Data Consumer identity certificate $Cert_{CONS}$ by the Domain Manager 110 to request registration of the Data Consumer by the Domain Manager 110. The signed identity certificate may be self-signed depending on the public key infrastructure. The identifier "ID" may be for example a public key.

In step 121, the Domain Manager 110 determines if the Data Consumer identity certificate is valid. More specifically, in step 121, the Domain Manager 110 may sent a certificate checking message "checkCert($Cert_{CONS)}$" to the Access Manager 111 using the signed Data Consumer identity certificate $Cert_{CONS}$ of the Data Consumer 24 to check if the signed Data Consumer identity certificate is valid. In response to the message received from the Domain Manager 110, the Access Manager 111 may send a "OK" or "KO" message to the Domain Manager 110 depending on whether the certificate is valid (OK message) or not valid (KO message).

If the certificate checking is successful, the Data Consumer is registered in step 122 (OK message). Otherwise, the registration of Data Consumer 24 is refused (KO message) in step 123.

In step 124, the Domain Manager 110 then sends a signing request "reqSignNonce(nonce, ID) to the Data Consumer 24, using as parameters the Data Consumer Identifier ID and a "nonce" parameter to request digital signing of the nonce parameter by the Data Consumer, if the Data Consumer certificate checking has been successful. The nonce parameter corresponds to control data which may be a generated piece of data that when digitally signed can be used to prove that an entity holding a specific public key has knowledge of it.

In step 125, if the Domain Manager 110 receives a valid response from the Data Consumer 24 (the nonce parameter digitally signed with the private key of the Data Consumer $K_{CONS}^{-}$), the Data Consumer can be registered. More specifically, in step 125, in response to the signing request from the Domain Manager 110, the Data Consumer 24 may send a response "respSignNonce( $\{nonce\}K_{CONS}^{-}$, ID)" to the Access Manager 111 comprising the nonce parameter digitally signed with the private key of the Data Consumer $K_{CONS}^{-}$ and the Data Consumer Identifier ID.

In step 126, the Domain Manager 110 records the Data Consumer. More specifically, in step 125, a record insertion request "insertRecord(ID, Role: consumer, $K_{CONS}^{+}$)" may be sent from the Domain Manager 110 to the Access Manager 111 to request insertion of a record of the Data Consumer in the User Registry 112. The record of the Data Consumer comprises storing the following parameters:

- The Data Consumer identifier ID; and

- A $K_{CONS}^{+}$ designating the public key of the Data Consumer 24.

Additional parameters may be stored also such as the Data Consumer.

In step 126, a registration response "respConsReg(ID, $\{K_{Domain}\}_{K_{CONS}^{+}}$, [$Cert_{DM}$]) "is sent from the Domain Manager 110 to the Data Consumer 24 to transmit information related to the key mechanism to the Data Consumer to confirm registration and provide access information to the Data Consumer for subsequent access to the domain 10. The registration response message may comprise the following parameters:

- The Data Consumer identifier ID;

- The shared key $\{K_{Domain}\}_{K_{CONS}^{+}}$ encrypted with the Data Consumer's public key $(K_{CONS}^{+})$ such that only the Data Consumer can decrypt it (the shared key or domain key is represented by $K_{Domain}$). In contrast, $\{K_{Domain}\}_{K_{CONS}^{-}}$ designates the domain key that has been digitally signed by the Data Consumer's private key $(K_{CONS}^{-})$, which may be used to prove that the Data Consumer knows the key, and thus prove the authenticity of communications with the Domain Manager;

- An identity certificate signed by the Domain Manager[$Cert_{DM}$].

The following table shows the source entity/destination entity of each message exchanged according to the Data Consumer registration protocol:

| From | To | Message |
|---|---|---|
| Data Consumer | Domain Manager | reqConsReg(ID, $Cert_{CONS}$) |
| Domain Manager | ID Manager | checkCert($Cert_{CONS}$) |

(continued)

| From | To | Message |
|------|-----|---------|
| Access Manager | Domain Manager | OK/KO |
| Domain Manager | Data Consumer | reqSignNonce(nonce, ID) |
| Data Consumer | Access Manager | respSignNonce( $\{nonce\}K_{CONS}^{-}$, ID) |
| Domain Manager | Access Manager | insertRecord(ID, Role: consumer, $K_{CONS}^{+}$ ) |
| Domain Manager | Data Consumer | respConsReg(ID, $\{K_{Domain}\}_{K_{CONS}^{+}}$ [,Cert$_{DM}$]) |

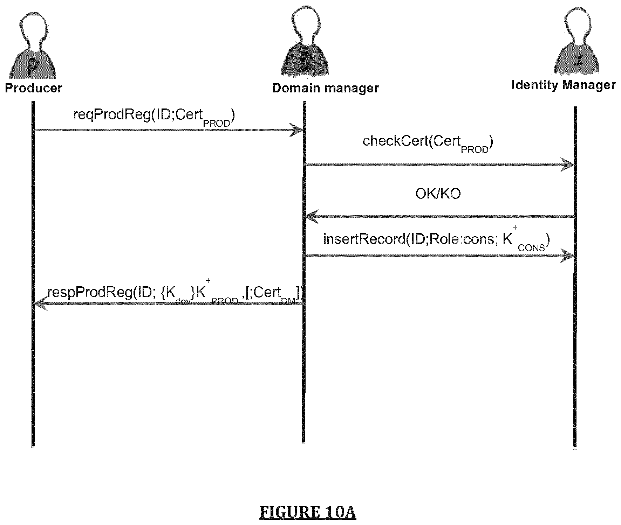

Figure 10A is a sequential diagram showing the messages exchanged for Data Producer registration, according to the Data Producer registration protocol.

The protocol for Data Producer registration may be implemented among the Domain Manager 110, the Access Manager 111 and a given Data Producer 22 to register the Data Producer 22.

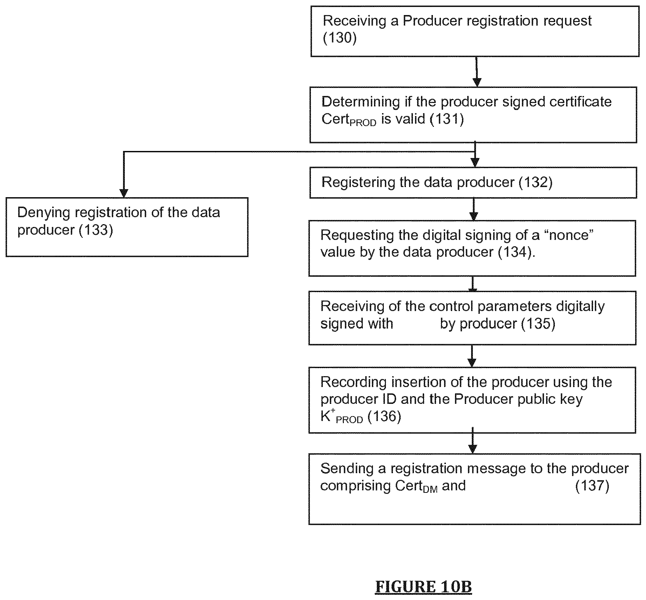

Figure 10B is a flowchart of the Data Producer registration method corresponding to the Data Producer registration protocol of figure 10A.

The following description of the Data Producer registration method will be made with reference to Figure 10B, conjointly with Figure 10A.

In a first step 130, a Data Producer registration request "reqProdReg(ID, Cert$_{PROD}$)" is received by the Domain Manager 110 from a Data Producer 22 to request registration of the Data Producer by the Domain Manager 110. The request comprises the Data Producer Identifier ID and a signed identity certificate Cert$_{PROD}$ associated with the Data Producer. The identity certificate may be self-signed depending on the public key infrastructure. The identifier "ID" may be for example a public key.

In step 131, the Domain Manager 110 checks if the Data Producer's identity certificate Cert$_{PROD}$ is valid. More specifically, in step 131, the Domain Manager 110 may send a certificate checking message "checkCert(Cert$_{PROD}$)" to the Access Manager 111 using the signed identity certificate Cert$_{PROD}$ of the Data Producer 22 to check if the Data Producer's identity certificate is valid.

In response to the message received from the Domain Manager 110, the Access Manager sends an "OK" or "KO" message to the Domain Manager 110 depending on whether the certificate is valid (OK message) or not valid (KO message).

If the certificate checking is successful, in step 132, the Data Producer is registered (OK message). Otherwise, the registration of Data Producer 22 is denied in step 133 (KO message).

In step 134, the Domain Manager 110 then sends a sign request " reqSignNonce(nonce, ID)" to the Data Producer 22, using as parameters the Data Producer Identifier ID and a "nonce" value to request digital signing of the nonce value by the Data Producer, if the producer certificate checking has been successful. The nonce parameter is a generated (typically random) piece of data that when digitally signed can be used to prove that an entity holding a specific public key has knowledge of it.

In step 135, if the Domain Manager 110 receives a valid response from the Data Producer 22 (the nonce parameter digitally signed with the private key of the Data Producer $K_{PROD}^{-}$ ), the Data Producer can be registered. More specifically, in step 135, in response to the signing request from the Domain Manager 110, the Data Producer 22 may send a response "respSignNonce( $\{nonce\}K_{PROD}^{-}$, ID)" to the Access Manager 111 comprising the nonce parameter digitally signed with the private key of the Data Producer $K_{PROD}^{-}$ and the Data Producer Identifier ID.

In step 136, the Domain Manager 110 then creates a record for the Data Producer. In particular, the Domain Manager 110 may record the Data Producer 22 by sending a record insertion request "insertRecord(ID, Role: producer, $K_{PROD}^{+}$ )" to the Access Manager 111 to request insertion of a record of the Data Producer in the User Registry 112. The insertion request message may comprise:

- The Data Producer Identifier ID; and
- A $K_{PROD}^{+}$ designating the public key of the Data Producer 22.

In step 136, the Domain Manager sends a registration response "respProdReg(ID, $\{K_{Derived}\}_{K_{PROD}^{+}}$, [Cert$_{DM}$])" to the Data Producer 22 to confirm the registration and transmit access information to the Data Producer in response to the initial registration request. The registration response message may comprise the following parameters:

- The Data Producer Identifier ID;

- An encrypted key $\{K_{Derived}\}_{K_{PROD}^+}$ designating the key $K_{Derived}$ derived from domain key $K_{DOMAIN}$ encrypted with the Data Producer's public key $K_{PROD}^+$ such that only the Data Producer can decrypt it; and

- The identity certificate signed by the Domain Manager [Cert$_{DM}$].

The Derived key can be sent to the Producer using a separate secure channel, for example, using SSUTLS or any other secure communication protocol.

The following table shows the source entity/destination entity of each message exchanged according to the Data Producer registration method :

| From | To | Message |
|---|---|---|
| Data Producer | Domain Manager | reqProdReg(ID, Cert$_{PROD}$) |
| Domain Manager | Access Manager | checkCert(Cert$_{PROD}$) |
| Access Manager | Domain Manager | OK/KO |
| Domain Manager | Data Producer | reqSignNonce(nonce, ID) |
| Data Producer | Access Manager | respSignNonce( $\{nonce\}K_{PROD}^-$, ID) |
| Domain Manager | Access Manager | insertRecord(ID, Role: producer, $K_{PROD}^+$) |
| Domain Manager | Data Producer | respProdReg(ID, $\{K_{Derived}\}_{K_{PROD}^+}$ [, Cert$_{DM}$]) |

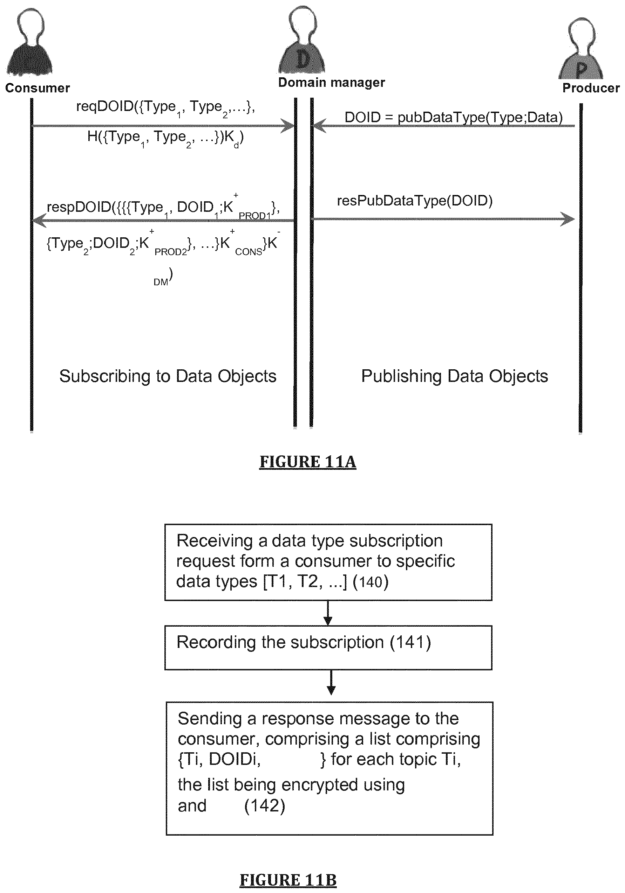

Figure 11A is a sequential diagram illustrating a data type subscription protocol, according to certain embodiments of the invention.

The protocol for data type subscription may comprise exchange of messages between a Domain Manager 110 and a given Data Consumer 24 for subscription to specific data types by the Data Consumer 24.

Figure 11B is a flowchart of the data type subscription method corresponding to the data type subscription protocol of figure 11A.

The following description of the data type subscription method will be made with reference to Figure 11B, conjointly with Figure 11A.

In step 140, a data type subscription request "reqDOID({[T$_1$,T$_2$,...], H{T$_1$,T$_2$,...}$_{K_{Domain}}$}" is sent from the Data Consumer 24 to the Domain Manager 110 to request subscription to specific data types T$_1$, T$_2$, etc. For example data type T$_1$ may refer to a Topic 1, data type T$_2$ may refer to a Topic 2, etc. It should be noted that in the notation "reqDOID({[T$_1$,T$_2$,...], H{T$_1$,T$_2$,...}$_{K_{Domain}}$}" for the subscription request, it is assumed that the ID of the requesting consumer is known. If the requesting consumer is not known, the subscription request may include the ID of the requesting Consumer, such as for instance the public key of the requesting consumer, as an additional parameter. In the following description, the ID of the requesting consumer will be assumed to be known for illustrative purpose. The data type request uses as parameters a list of the data types in the domain associated with the Domain Manager to which the Data Consumer 24 wants to subscribe H{T$_1$,T$_2$,...}$_{K_{Domain}}$ is a cryptographic hash that is used by the Domain Manager as a proof that the request was indeed issued by a legitimate Data Consumer.

In step 141, the Domain Manager records the subscription of the Data Consumer for the identified data type, for example in a User Registry 112.

In step 142, the Domain Manager 110 sends to the Data Consumer 24 a response message to the Data Consumer including an encrypted list comprising triplets {T$_i$, DOIDi, $K_{PROD_{i1}^+}$} for each subscribed topic T$_i$:

$$\text{respDOID}(\{\{\{T_1, \text{DOID}_1, K_{PROD_1^+}\}, \{T_2, \text{DOID}_2, K_{PROD_2^+}\}, \dots\}_{K_{CONS}^+}\}_{K_{DM}^-}).$$

Alternatively, instead of being encrypted, the above list may be signed.

Domain/Topic keys may then be securely stored by the Domain Manager 110 and managed according to best practices, such as for example using a Hardware Security Module or, in a simple case, an encrypted data store on disk. Data Producers 22 and Data Consumers 24 may store keys in memory while in use and do not need to keep them permanently. Instead they may request any keys from the Domain Manager 110 when necessary. However, the Data Producers 22 and the Data Consumers 24 may alternatively choose to store the domain/topic keys in secure storage using best practices for handling and storing cryptographic material. For example, a Hardware security module may be used to handle key materials if this is needed to meet security requirements (e.g. high cost and high security of the keys) or a software solution where cost is a factor and the security requirements are lower.

Whenever encrypted data is received, the Data Consumers 24 may examine the associated meta-data, detailing the identifier of the Data Producer 22 that published the data as well as the domain and (when topics are in use) the topic identifiers to locate the appropriate derived key to decrypt the data.

The response message comprises a list of data type information for each requested data type $T_i$, the list being encrypted using the Data Consumer public key $K_{CONS}^+$ and being digitally signed by the Domain Manager's private key $(K_{DM}^-)$. The list may comprise for each requested data type $T_i$:

- The data type $T_i$,
- The Domain Object Identifier $DOID_i$ to which the data type $T_i$ belongs,
- The public key $K_{PROD_i^+}$ of the Data Producer 22 which produced the data type $T_i$.

It should be noted that, in certain embodiments of the invention, the method for subscribing to data types could be simplified, for example through the use of mutually authenticated and encrypted communication links such as using SSL.

The following table shows the source entity/destination entity of each message exchanged according to the data type subscription method :

| From | To | Message |
|---|---|---|
| Data Consumer | Domain Manager | $reqDOID(\{[T_1,T_2,...], H\{T_1,T_2,...\}_{K_{Domain}}\}$ |
| Domain Manager | Data Consumer | $respDOID(\{\{\{T_1, DOID_1, K_{PROD_1^+}\},$ $\{T_2, DOID_2, K_{PROD_2^+}\}, ...\}_{K_{CONS}^+}\}_{K_{DM}^-})$ |

Figure 11A also illustrates the data type publishing protocol, according to certain embodiments of the invention.

The protocol for data type publication comprises exchange of messages between a given Data Producer 22 and the Domain Manager for publication of specific data types by the Data Producer 22.

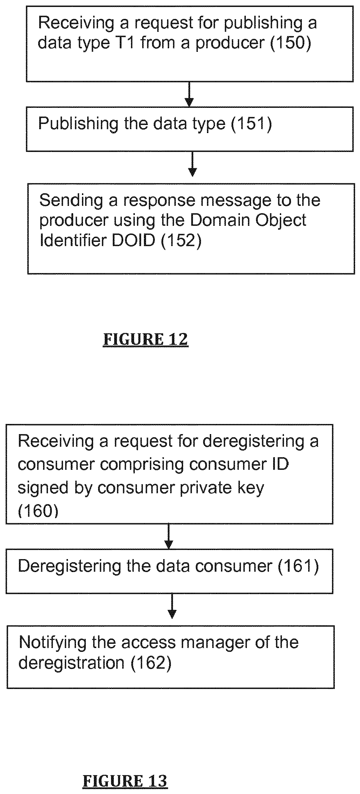

Figure 12 is a flowchart of the data type publishing method corresponding to the data type publishing protocol shown in figure 11A.

The following description of the data type publishing method will be made with reference to Figure 12, conjointly with Figure 11A.

In step 150, a data type publishing request message "DOID = pubDataType($T_1$, Data)" is sent from a data Publisher 22 to the Domain Manager 110 to request publication of a new domain object identified by an Domain object identifier DOID and comprising a data type $T_1$ as well as data (the pubDataType function generates the DOID). For example data type $T_1$ may refer to a Topic 1. As used herein, the "Data" parameter of the pubDataType function represents a description of the data items that the Data Producer 22 would like to publish. The "data" parameter is an optional field.

In step 151, the Domain Manager publishes the data type $T_1$ in the shared data space. This may include using the underlying data distribution system to create the data type. The implementation of step 151 may dependent on the of the chosen system

In step 152, the Domain Manager 110 sends to the Data Producer 22 a response message "resPubData(DOID)" to the data type publishing request using the Domain Object Identifier DOID. This indicates to the Data Producer 22 whether or not the request to publish to the specified data topic is allowed. For example, if the request is successful, the response may consist of the Data Producer-specific Derived Key.

The following table shows the source and destination entities of each message exchanged according to the data type publishing method:

| From | To | Message |
|---|---|---|
| Data Producer | Domain Manager | DOID = pubDataType($T_1$, Data) |
| Domain Manager | Data Producer | resPubData(DOID) |

Whenever the Data Producer 24 wishes to publish confidential information, the Data Producer 24 may use the appropriate Derived Key to encrypt the data. This encrypted data may then be published using the original data distribution system, along with associate meta-data, indicating the identifier of the Data Producer 24 as well as the domain and topic names if not already present in the existing data distribution system.

Figure 13 is a flowchart of the consumer deregistration method, according to certain embodiments of the invention.

The method for deregistering a given Data Consumer 24 may comprise exchange of messages between the Data Consumer 24 and the Domain Manager 110 for deregistering the Data Consumer 24, according to a consumer deregistration protocol.

More specifically, in step 160, a Data Consumer deregistration request "reqCancelReg(ID, $\{ID\}_{K^-_{CONS}}$ )" is sent from a Data Consumer 24 to the Domain Manager 110 to request deregistration of the Data Consumer, for example when a user does not wish to be subscribed anymore. The deregistration request comprises the identifier ID of the Data Consumer 24 and a signed identifier corresponding to the Data Consumer Identifier ID that has been digitally signed by the Data Consumer's private key $K^-_{CONS}$. The Domain Manager 110 may use such digital signature to verify that the deregistration request is from the specific Data Consumer. However, no access control decision is required as deregistration is not an action that will be mediated upon as it is always allowed, in the preferred embodiments of the invention. Deregistration actions may, however, be logged by the Domain Manager 110.

In step 161, the Domain Manager 110 deregisters the Data Consumer 24 from the consumer information repository by removing the record corresponding to the Data Consumer.

In step 162, the Domain Manager 110 then sends to the Access Manager 111a registration result message for informing the Access Manager 111 that the Data Consumer 24 has been successfully deregistered ("OK" message) or that the deregistration of the Data Consumer 24 has failed ("KO" message). Failure to deregister can only happen when the Data Consumer 24 is not actually registered for the specific domain/topic.

The following table shows the source and destination entities of each message exchanged according to the Data Consumer deregistration method:

| From | To | Message |
|---|---|---|
| Data Consumer | Domain Manager | reqCancelReg(ID, $\{ID\}_{K^-_{CONS}}$ ) |
| Domain Manager | Access Manager | OK/KO |

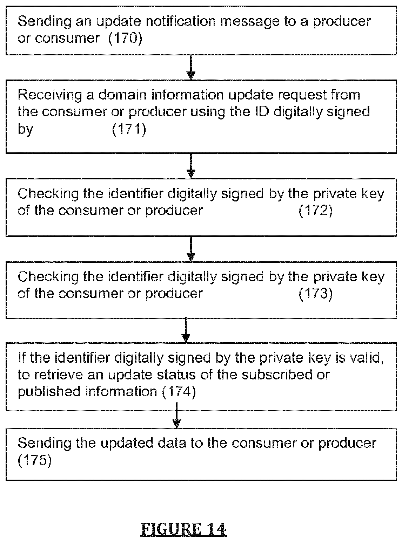

Figure 14 is a flowchart of the domain information update method, according to certain embodiments of the invention.

The method for updating domain information comprises exchange of messages among the Domain Manager 110, the Access Manager 111, and a Data Producer 22 or a Data Consumer 24 for notifying updates related to domain information to the Data Consumer 24 or the Data Producer 22, domain information update protocol.

In particular, in step 170, an update notification message "notifyUpdate(ID)" is sent from the Domain Manager 110 to a Data Producer 22 or a Data Consumer 24 to notify a domain information update to the Data Producer/Data Consumer identified by the ID identifier, passed as a parameter in the request. Such messages may be sent in a number of instances:

(1) when a new Data Producer 22 has registered (messages only sent to Data Consumers 24) to notify them that they will need to generate new derived keys;
(2) when the topic key has been revoked, for example if a Data Producer 22 has been removed either for malicious or any other reason, and
(3) when the topic key has been rotated, to inform the users that a new topic key is available.

The update notification message may be sent directly to each registered Data Consumer 24 and Data Producer 22 as appropriate. The Domain Manager 110 may use the list of users in the User Registry 112 to determine the list of appropriate Data Consumers 24 and Data Producers 22.

In step 171, the Data Consumer 24 or Data Producer 22 identified by the ID identifier sends a domain information update request to request the domain information update:"reqDomainUpdate(ID, $\{ID\}_{K^-_{\overline{CONS}}}$ )". The domain information
$\overline{PROD}$
request comprises the Data Consumer or Data Producer identifier ID, and the identifier ID that has been digitally signed by the private key of the Data Consumer or the Data Producer corresponding to the identifier ID ( $\text{noted} K^-_{\overline{CONS}}$ as it
$\overline{PROD}$
may be either a consumer or a producer private key). Digital signing ensures that requests come from the corresponding Data Consumer 24 or Data Producer 22 to prevent malicious users from impersonating valid user.

In step 172, the Domain Manager 110 checks the identifier digitally signed by the private key of the Data Consumer or Data Producer $\{ID\}_{K^-_{\overline{CONS}}}$ . In particular, step 172 may be performed by sending a signature checking
$\overline{PROD}$
message to the Access Manager 111 for checking the identifier digitally signed by the private key of the Data Consumer or Data Producer $\{ID\}_{K^-_{\overline{CONS}}}$. The Access Manager 111 then checks the digitally signed identifier $\{ID\}_{K^-_{\overline{CONS}}}$.
$\overline{PROD}$                                                                                                                        $\overline{PROD}$

If the checking is successful, the Access Manager 111 sends a success message "OK" to the Domain Manager 110. Otherwise, the Access Manager 111 sends a failure message "KO" to the Domain Manager 110 to inform the Domain Manager that the Data Consumer or Data Producer is not allowed access to the domain information updates.

If the digitally signed identifier $\{ID\}_{K^-_{\overline{CONS}}}$ is valid, in step 173, the Domain Manager110 determines the update
$\overline{PROD}$
status of the information to which the Data Consumer has subscribed (if the update request has been sent by a Data Consumer) or the Data Producer has published (if the update request has been sent by a Data Producer). Step 173 may be performed by sending a status request "reqStatus(ID)" to the Access Manager 111 to request the update status of the information to which the Data Consumer has subscribed or the Data Producer has published. If the data have been updated, the Access Manager 111 sends back to the Domain Manager 110 a response message " respStatus([ID, Updated Data] [NIL])" to identify the updated data. The response comprises the Data Consumer or Data Producer identifier as well as the updated data if any.

In step 174, the Domain Manager 110 then sends a response " respDomainUpdate(UpdateData)" to the Data Consumer 24 or Data Producer 22 corresponding to the identifier which comprises the updated data (UpdateData).

The Update data sent to the Data Consumer or Data Producer may have the following format:

UpdateData = [Member ID, Context, Domain Update Information].

As used herein, the Member ID designates either the Data Publisher 24 identifier or the Data Consumer 22 identifier depending on the target of the message. The Context field indicates the type of update message. The Domain Update Information defines message contents. This is dependent of the Context.

The following table shows the source and destination entities of each message exchanged according to the Domain Information Update method:

| From | To | Message |
|------|-----|---------|
| Domain Manager | Data Producer/Consumer | notifyUpdate(ID) |
| Data Producer/Consumer | Domain Manager | reqDomainUpdate(ID, $\{ID\}_{K^-_{CONS/PROD}}$ ) |
| Domain Manager | Access Manager | checkSig ($\{ID\}_{K^-_{CONS/PROD}}$) |
| Access Manager | Domain Manager | OK/KO |
| Domain Manager | Access Manager | reqStatus(ID) |
| Access Manager | Domain Manager | respStatus([ID, Updated Data] [NIL]) |
| Domain Manager | Data Producer/Consumer | respDomainUpdate(UpdateData) |

According to another aspect of the invention, a protocol for context/domain update information may be also used by the Domain Manager 110 as illustrated by the following table:

| Context | No Update Required | Domain Key Revocation | Data Producer Key Revocation | New Data Producer added |
|---------|-------------------|----------------------|-----------------------------|--------------------------|
| **Domain Update Information** | NIL | New Domain Key (If update is for a Data Consumer) \| New Derived Key (If update is for a Data Producer) | List of revoked Data Producer keys | List of new Data Producers for the current subscriptions types |

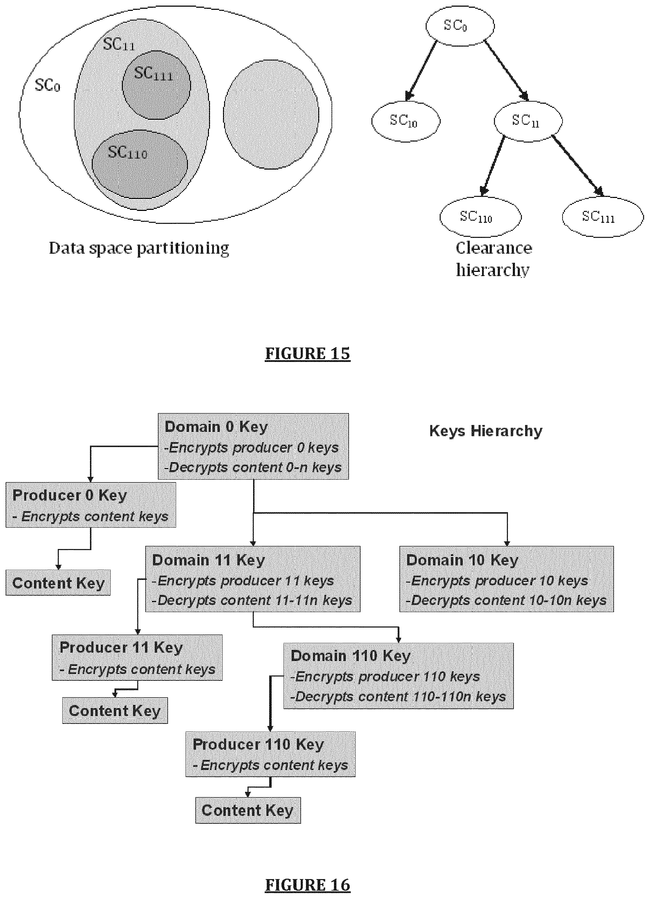

The data securing system 100 may be used to provide an enhanced view of MILS/MLS models such that they can be combined as shown in Figure 15. In the example shown in Figure 15, MLS and MILS can be combined into a "hierarchical" security architecture.

Multi-level security is provided to support different classes of confidentiality for the domain data, and clearance levels for domain consumers. By using fine-grained domains, higher clearance level could register to a large number of domains, getting thus access to larger data sets. However, key management in such a solution would be prohibitively complex for DDS-based applications. The described embodiments of the invention make it possible to define a "hierarchical" encryption scheme for the domain data that can allow a single key of level and decrypt all data with a confidentiality level lower than or equal to***.

Existing solutions to this problem assume that the participating entities and information objects can be partitioned into a rooted tree of security classes $SC_i$, with $SC_j \subseteq SC_i$ if node j is descendant of node i, and $SC_j \cap SC_k = \varnothing$ for all sibling nodes j and k. A parent security class (or clearance level) holds a (symmetric) key that can decrypt all data belonging to the security classes of all its descendants.

Conceptually, the simplest multi-level hierarchy is obtained when the lower clearance levels get access to a smaller set of data objects than the higher levels. This invention provides a generalized version of this type of hierarchy, acting as a combination between MLS and MILS (multiple independent levels of security) solutions, as sibling security classes can be regarded as MILS.

The entity having the highest clearance level chooses a secret key $K_{SC0}$ and generates the lower-level keys $K_{SC10}$ and $K_{SC11}$, which are handed over to the members of the clearance level $SC_{10}$ and $SC_{11}$, respectively. The lower-level keys can be produced with any keyed hash function of some identification information for a particular security class. Similarly, $SC_{11}$ uses $K_{SC11}$ to generate the keys for its two descendants. When an entity that belongs to the security class $SC_0$ wants to decrypt data in the security class $SC_{111}$, it will generate the appropriate key as:

$K_{SC11} \leftarrow h(h(K_{SC0}, ID_{SC11}), ID_{SC11})$, where h stands for a keyed hash function (for instance a key diversification function), and $ID_{SCx}$ represents some public identifier of the security class x.

Such solution can be easily adapted to the design proposed in the basis DDS security solution if producers and consumers are assigned security classes from the same hierarchy.

Figure 16 represents the Key hierarchy for a branch of the clearance hierarchy of figure 15.

Producers 160, 161,162 become additional leaf nodes to each of the nodes in the consumers' hierarchy. All domain management protocols remain valid, except that an additional parameter is introduced in the registration protocol to specify the security class.

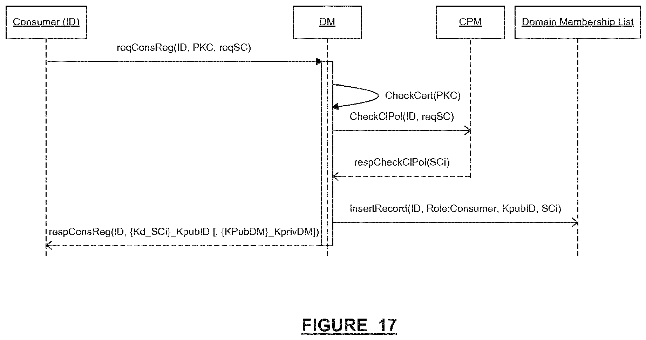

Figure 17 represents an extended version of the consumer registration protocol, according to certain embodiments of the invention.

In the initial request, a third variable may be included to specify the desired security level. An additional component, the Clearance Policy Manager (CPM), may decide the actual clearance level to be assigned to the requester, and return to the Domain Manager (DM) the identifier of the appropriate security class. The DM produces the domain key for that class $Kd_{SCi}$ (this implies that the DM knows the full definition of the SC hierarchy). The response to the requester comprises an identical structure as previously described with reference to figures 9A and 9B. If necessary, an additional parameter may be used to explicitly state the actual clearance level granted. The producer registration protocol can be extended in a similar manner.

The revocation of a member of a certain security class will then require the revocation of all the security classes sub-tree stemming from that node, which may require lower overhead than the revocation of the whole domain. A positive side-effect of MLS may thus be a higher flexibility of domain management.

The protocol for subscribing to data types does not need any change. However, the Domain Manager may optionally comprise additional functionality to handle filtering the data types to which each entity in a given SC is allowed to subscribe.

The protocols for data encryption and decryption, writing and reading, remain unchanged, though it should be noted that for efficient operation producers and consumers should know the SC of each data object. A labelling mechanism may accordingly be used to bind the corresponding SC to each data object.

For the efficient generation, management, and use of encrypted indexes, each search term is to be encrypted with the key of the virtual producer which generates the index. In the case of MLS, such an index producer may be assumed for each of the SCs. Separate queries may be produced for each security class.

Since each producer may use its own unique key for encrypting content, there is generally no concern about the origin of data. However, if there are reasons to suspect that this is not sufficient then each data object may contain an additional authentication token.

In principle, two elements may require ensuring non-repudiation of receipt: data and cryptographic material. Since data is only received by domain consumers, which are regarded as trustworthy within their respective SC, there is generally no need to ensure non-repudiation of receipt of data. Even if producers receive cryptographic material and then deny service, this generates no compromising effect on the security of a domain.

The various embodiments of the invention may be used for example when entities need to share data while maintaining the control of the data that they themselves own. For example, in a crisis management application, multiple organisations need to share information in a timely and secure manner. This can be enabled by the data securing system 100 through the use of Domain Managers 110 for each organisation and the use of cross-domain authorizations towards providing a secure shared data space 12. Publishing information is then pushed to the authorized subscribers using a publish/subscribe mechanism (such as for example OpenSplice DDS).

The invention may be also applied to intelligence sharing and analysis applications. Such applications use automated sensors that can be used to automatically acquire information in dangerous locations where there is a risk of equipment capture. The invention may be used to revoke access to the considered domain to these captured devices while not revealing any information to them, as they can be configured to have publication rights only. Spurious (intentionally or otherwise) information can be identified and scrubbed from the shared data space 12, while additional information can be automatically identified by the metadata associated with it.

More generally, the data securing solution according to various embodiments of the invention can be applied to an important number of application areas including, with no limitation, crisis management, information and intelligence sharing, Big Data analysis and multi-party communication across ad hoc networks.

The data securing system and method according to the invention thus allow protecting the confidentiality and integrity of data objects for their entire lifetime, regardless of the security of the storage and communication media.

More specifically, distribution of information between parties is performed so that it is possible to control when, where and to whom the information is passed. With the data securing system and method according to the invention, the data owners can retain control over the keys to their data. Users of the system are then required to negotiate directly with data owners in order to gain access to the data. As a result, the data can remain under the control of the data owner at all times (the data owner can not only decide on the access rights of other users but also retain the ability to audit accesses that take place).

The data securing system according to the described embodiments of the invention thus allows identification of the active users in the system such that only authorised users are allowed access.

Further, the generation of the shared domain and derived cryptographic keys is performed in a transparent manner, while the distribution of these shared cryptographic keys can be performed in a secure manner to authorised users.

The encryption of the data produced in the shared data space 12 with the shared cryptographic keys can be made such that the data remains under the control of the data owner, with access to the keys being granted by means of negotiations with the data owner. Negotiation can be managed by one or more a trusted third parties.

In particular, it is an advantage of the invention to grant access to processes running on trusted systems under the control of the data owner, while such processes can handle queries from any third party in search of the data, and also to grant access to processes running on trusted systems under the control of other users. Processes can handle queries from third parties by aggregating and sanitising information for specific queries.

The invention further provides a number of advantages which include with no limitation:

- It ensures that at least some critical functionality will remain available (e.g. data exchange between registered participants) even when one or more system components fail.

- It supports non-disruptive changes to group membership;

- It support multiple classification systems by multiple authorities;

- It ensures that each information owner maintains control over information released or shared with other authorities, and

- It defines an efficient exclusion and revocation mechanisms.

Although the embodiments of the present invention have been described in detail, it should be understood that various changes and substitutions can be made therein without departing from spirit and scope of the inventions as defined by the appended claims. In particular, the invention is not limited to a publish/subscribe mechanism and can be adapted to other interaction models. Further, the invention is not limited to a specific type of Shared Data space, and may apply to a wide variety of shared data spaces such as a centralized database using an adapted system where each row is individually encrypted by the information producer, or a Shared Blackboard system. Variations described for the present invention can be realized in any combination desirable for each particular application. Thus particular limitations, and/or embodiment enhancements described herein, which may have particular advantages to a particular application need not be used for all applications. Also, not all limitations need be implemented in methods, systems and/or apparatus including one or more concepts of the present invention.

Embodiments of the present invention can take the form of an embodiment containing both hardware and software elements.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications/modules described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions specified in the flowchart and/or block diagram block or blocks.

**Claims**

1. A data securing system for controlling data distribution in a distributed computing system (10) comprising a set of nodes interconnected through a communication system and a shared data storage space (12), each node owning a part of the data maintained in said shared data storage space,
   wherein each node comprises a node manager (110) for controlling access by producer and consumer nodes to the part of the shared data storage space owned by the associated node, the data securing system being configured to associate a first group among the group of consumer nodes and the group of producer nodes with a first trusting level and a second group among the group of consumer nodes and the group of producer nodes with a second trusting level, wherein said node manager (110) is configured to generate a common shared key to all members of the first group and to generate a unique key for each member of the second group, said unique key being derived from the common shared key, the node manager (110) being further configured to control access to the node data part in the shared data storage space (12) by a member of the first group based on the common shared key generated for the first group and to control access to the node data part in the shared data storage space (12) by a member of the second group based on the unique derived key generated for said member.

2. The system of claim 1, wherein the first trusting level is higher than the second trusting level, said first group comprising the group of consumers and said second group comprising the group of producers.

3. The system of claim 2, wherein each producer node (22) is adapted to produce data types in the shared data storage space (12) by encrypting said data types with the derived key generated for said producer and sending the encrypted data types to the node manager, the node manager (110) being configured to store said encrypted data types in the shared data storage space (12).

4. The system of claim 3, wherein each consumer node (24) is adapted to consume data types from the shared data storage space (12) by receiving said encrypted data types from the node manager (110), and decrypting said encrypted data types by deriving the producer derived key from the common shared key.

5. The system of any preceding claim, wherein the node manager (110) is configured to register a member of the first group or of the second group, in response to a request from said member comprising the identifier of the member and a certificate signed by the member if the signed certificate is determined to be valid (122, 132).

6. The system of claim 5, wherein the node manager (110) is further configured, if the signed certificated is valid, to:

   - generate control data, and
   - request the digital signing of said control data by said member (124, 134),
   - register said member, in response to the digital signing of said control data by said member (125, 135).

7. The system of claim 6, wherein said digital signing comprises the control data signed with the private key of said member and the identifier of said member.

8. The system of any claim 5 to 7, wherein the node manager (110) is configured to register the member by storing information in a member repository, said information comprising the member identifier and the public key of the member.

9. The system of any preceding claim 5 to 8 wherein, in response to the registration of a member, the node manager (110) is configured to send to said member the common shared key encrypted with the public key of the member, if the member belongs to the first group, or the unique derived key generated for the member and encrypted with the public key of the member, if the member belongs to the second group.

10. The system of any preceding claim, wherein in response to a request for consumption of a set of data types from said shared data storage space (12) by a consumer node, the node manager (110) is configured to send to the consumer node (24) a list encrypted with the public key of the consumer and the private key of the node manager (110), said list comprising a number of triplets for each requested data type, each triplet comprising :

   - the data type;
   - the object identifier associated with said data type; and
   - the public key of the producer which produced the data type.

11. The system of any preceding claim, wherein in response to a request for producing a data type in said shared data storage space (12) by a producer node, the node manager (110) is configured to send to the producer node (24) the object identifier associated with said data type.

12. The system of any preceding claim, wherein the node manager is configured to deregister a member of a first group or of the second group, in response to a request received from said member (160) comprising the member identifier digitally signed by the private key of the member.

**13.** The system of any preceding claim, wherein the node manager (110) is configured to send updated information from the shared data storage space (12) to a member of the first group or the second group, in response to an information update request from said member comprising the member identifier digitally signed by the private key of the member, by determining if the member identifier digitally signed by the private key of the member is valid (172), determining the update status of the data to which the member is associated as a consumer or producer and sending a message to the member comprising the member identifier, context information, and the updated information.

**14.** The system of any preceding claim, wherein the node manager is configured to implement a publish/subscribe model to control the producer nodes and consumer nodes.

**15.** The system of any preceding claim, wherein the node manager (110) is configured to revoke the shared key in response to a detected misuse of said shared key, and generate a new shared key for the registered members of the first group and new respective derived keys for each member of the second group.

**16.** The system of any preceding claim, wherein the node manager (110) is configured to periodically revoke the shared key and the derived keys, and generate a new shared key for the registered members of the first group and new respective derived keys for each member of the second group.

**17.** A data securing method for controlling data distribution in a distributed computing system (10) comprising a set of nodes interconnected through a communication system and a shared data storage space (12), each node owning a part of the data maintained in said shared data storage space,
wherein said method comprises controlling access by producer and consumer nodes to the part of the shared data storage space (12) owned by the associated node, the method comprising associating a first group among the group of consumer nodes and the group of producer nodes with a first trusting level and a second group among the group of consumer nodes and the group of producer nodes with a second trusting level, wherein said method further comprises generating a common shared key to all members of the first group, and a unique key for each member of the second group, said unique key being derived from the common shared key, the control of the access to the node data part in the shared data storage space (12) by a member of the first group being based on the common shared key generated for the first group and the control of the access to the node data part in the shared data storage space (12) by a member of the second group being based on the unique derived key generated for said member.

**Patentansprüche**

**1.** Datensicherungssystem zum Steuern der Datenverteilung in einem verteilten Rechensystem (10), das eine Menge von Knoten, die durch ein Kommunikationssystem miteinander verbunden sind, und einen gemeinsam genutzten Datenspeicherraum (12) umfasst, wobei jedem Knoten ein Teil der in dem gemeinsam genutzten Datenspeicherraum verwalteten Daten gehört,
worin jeder Knoten einen Knotenmanager (110) zum Steuern des Zugriffs durch Produzenten- und Konsumentenknoten auf denjenigen Teil des gemeinsam genutzten Datenspeicherraums, der dem zugeordneten Knoten gehört, umfasst, wobei das Datensicherungssystem dafür konfiguriert ist, einer ersten Gruppe aus der Gruppe von Konsumentenknoten und der Gruppe von Produzentenknoten ein erstes Vertrauensniveau zuzuordnen und einer zweiten Gruppe aus der Gruppe von Konsumentenknoten und der Gruppe von Produzentenknoten ein zweites Vertrauensniveau zuzuordnen, worin der Knotenmanager (110) dafür konfiguriert ist, einen gemeinsam genutzten Schlüssel für alle Mitglieder der ersten Gruppe zu erzeugen und einen eindeutigen Schlüssel für jedes Mitglied der zweiten Gruppe zu erzeugen, wobei der eindeutige Schlüssel aus dem gemeinsam genutzten Schlüssel abgeleitet wird, wobei der Knotenmanager (110) ferner dafür konfiguriert ist, den Zugriff auf den Knotendatenteil im gemeinsam genutzten Datenspeicherraum (12) durch ein Mitglied der ersten Gruppe auf der Grundlage des für die erste Gruppe erzeugten gemeinsam genutzten Schlüssels zu steuern und den Zugriff auf den Knotendatenteil im gemeinsam genutzten Datenspeicherraum (12) durch ein Mitglied der zweiten Gruppe auf der Grundlage des für das Mitglied erzeugten eindeutigen Schlüssels zu steuern.

**2.** System nach Anspruch 1, worin das erste Vertrauensniveau höher als das zweite Vertrauensniveau ist, wobei die erste Gruppe die Gruppe der Konsumenten umfasst und die zweite Gruppe die Gruppe der Produzenten umfasst.

**3.** System nach Anspruch 2, worin jeder Produzentenknoten (22) dafür eingerichtet ist, Datentypen im gemeinsam genutzten Datenspeicherraum (12) durch Verschlüsseln der Datentypen mit dem für den Produzenten erzeugten abgeleiteten Schlüssel und Senden der verschlüsselten Datentypen an den Knotenmanager zu produzieren, wobei der Knotenmanager (110) dafür konfiguriert ist, die verschlüsselten Datentypen im gemeinsam genutzten Datenspeicherraum (12) zu speichern.

4. System nach Anspruch 3, worin jeder Konsumentenknoten (24) dafür eingerichtet ist, Datentypen aus dem gemeinsam genutzten Datenspeicherraum (12) durch Empfangen der verschlüsselten Datentypen vom Knotenmanager (110) und Entschlüsseln der verschlüsselten Datentypen durch Ableiten des für den Produzenten abgeleiteten Schlüssels aus dem gemeinsam genutzten Schlüssel zu konsumieren.

5. System nach einem der vorhergehenden Ansprüche, worin der Knotenmanager (110) dafür konfiguriert ist, ein Mitglied der ersten Gruppe oder der zweiten Gruppe zu registrieren, und zwar als Antwort auf eine Anforderung von dem Mitglied, welche die Kennung des Mitglieds und ein durch das Mitglied signiertes Zertifikat umfasst, wenn das signierte Zertifikat als gültig bestimmt wird (122, 132).

6. System nach Anspruch 5, worin der Knotenmanager (110) ferner dafür konfiguriert ist, wenn das signierte Zertifikat gültig ist:

   - Kontrolldaten zu erzeugen,
   - die digitale Signatur der Kontrolldaten durch das Mitglied anzufordern (124, 134), und
   - das Mitglied als Antwort auf die digitale Signatur der Kontrolldaten durch das Mitglied zu registrieren (125, 135).

7. System nach Anspruch 6, worin die digitale Signatur die mit dem privaten Schlüssel des Mitglieds signierten Kontrolldaten und die Kennung des Mitglieds umfasst.

8. System nach einem der Ansprüche 5 bis 7, worin der Knotenmanager (110) dafür konfiguriert ist, das Mitglied durch Speichern von Information in einem Mitgliederverzeichnis zu registrieren, wobei die Information die Mitgliedskennung und den öffentlichen Schlüssel des Mitglieds umfasst.

9. System nach einem der vorhergehenden Ansprüche 5 bis 8, worin der Knotenmanager (110) dafür konfiguriert ist, als Antwort auf die Registrierung eines Mitglieds den mit dem öffentlichen Schlüssel des Mitglieds verschlüsselten gemeinsam genutzten Schlüssel an das Mitglied zu senden, wenn das Mitglied zur ersten Gruppe gehört, oder den für das Mitglied erzeugten und mit dem öffentlichen Schlüssel des Mitglieds verschlüsselten eindeutigen abgeleiteten Schlüssel, wenn das Mitglied zur zweiten Gruppe gehört.

10. System nach einem der vorhergehenden Ansprüche, worin der Knotenmanager (110) dafür konfiguriert ist, als Antwort auf eine Anforderung zur Konsumtion einer Menge von Datentypen aus dem gemeinsam genutzten Datenspeicherraum (12) durch einen Konsumentenknoten eine mit dem öffentlichen Schlüssel des Konsumenten und dem privaten Schlüssel des Knotenmanagers (110) verschlüsselte Liste an den Konsumentenknoten (24) zu senden, wobei die Liste eine Anzahl von Tripletts für jeden angeforderten Datentyp umfasst, wobei jedes Triplett umfasst:

   - den Datentyp;
   - die dem Datentyp zugeordnete Objektkennung; und
   - den öffentlichen Schlüssel des Produzenten, der den Datentyp produziert hat.

11. System nach einem der vorhergehenden Ansprüche, worin der Knotenmanager (110) dafür konfiguriert ist, als Antwort auf eine Anforderung zum Produzieren eines Datentyps in dem gemeinsam genutzten Datenspeicherraum (12) durch einen Produzentenknoten die dem Datentyp zugeordnete Objektkennung an den Produzentenknoten (24) zu senden.

12. System nach einem der vorhergehenden Ansprüche, worin der Knotenmanager dafür konfiguriert ist, die Registrierung eines Mitglieds einer ersten Gruppe oder der zweiten Gruppe aufzuheben, und zwar als Antwort auf eine von dem Mitglied empfangene Anforderung (160), welche die durch den privaten Schlüssel des Mitglieds digital signierte Mitgliedskennung umfasst.

13. System nach einem der vorhergehenden Ansprüche, worin der Knotenmanager (110) dafür konfiguriert ist, aktualisierte Information aus dem gemeinsam genutzten Datenspeicherraum (12) an ein Mitglied der ersten Gruppe oder der zweiten Gruppe zu senden, und zwar als Antwort auf eine Informationsaktualisierungsanforderung von dem Mitglied, welche die durch den privaten Schlüssel des Mitglieds digital signierte Mitgliedskennung umfasst, und zwar durch: Bestimmen, ob, die durch den privaten Schlüssel des Mitglieds digital signierte Mitgliedskennung gültig ist (172), Bestimmen des Aktualisierungsstatus der Daten, denen das Mitglied als Konsument oder Produzent zugeordnet ist, und Senden einer Nachricht an das Mitglied, welche die Mitgliedskennung, Kontextinformation und die aktualisierte Information umfasst.

14. System nach einem der vorhergehenden Ansprüche, worin der Knotenmanager dafür konfiguriert ist, ein Publizieren/Abonnieren-Modell zu implementieren, um die Produzentenknoten und Konsumentenknoten zu steuern.

15. System nach einem der vorhergehenden Ansprüche, worin der Knotenmanager (110) dafür konfiguriert ist, als Antwort auf einen ermittelten Missbrauch des gemeinsam genutzten Schlüssels den gemeinsam genutzten Schlüssel zu widerrufen und einen neuen gemeinsam genutzten Schlüssel für die registrierten Mitglieder der ersten Gruppe und neue jeweilige abgeleitete Schlüssel für jedes Mitglied der zweiten Gruppe zu erzeugen.

16. System nach einem der vorhergehenden Ansprüche, worin der Knotenmanager (110) dafür konfiguriert ist, periodisch den gemeinsam genutzten Schlüssel und die abgeleiteten Schlüssel zu widerrufen und einen neuen gemeinsam genutzten Schlüssel für die registrierten Mitglieder der ersten Gruppe und neue jeweilige abgeleitete Schlüssel für jedes Mitglied der zweiten Gruppe zu erzeugen.

17. Datensicherungsverfahren zum Steuern der Datenverteilung in einem verteilten Rechensystem (10), das eine Menge von Knoten, die durch ein Kommunikationssystem miteinander verbunden sind, und einen gemeinsam genutzten Datenspeicherraum (12) umfasst, wobei jedem Knoten ein Teil der in dem gemeinsam genutzten Datenspeicherraum verwalteten Daten gehört,
worin das Verfahren umfasst: Steuern eines Zugriffs durch Produzenten- und Konsumentenknoten auf denjenigen Teil des gemeinsam genutzten Datenspeicherraums (12), der dem zugeordneten Knoten gehört; wobei das Verfahren umfasst: Zuordnen einer ersten Gruppe aus der Gruppe von Konsumentenknoten und der Gruppe von Produzentenknoten zu einem ersten Vertrauensniveau und einer zweiten Gruppe aus der Gruppe von Konsumentenknoten und der Gruppe von Produzentenknoten zu einem zweiten Vertrauensniveau; worin das Verfahren ferner umfasst: Erzeugen eines gemeinsam genutzten Schlüssels für alle Mitglieder der ersten Gruppe und eines eindeutigen Schlüssels für jedes Mitglied der zweiten Gruppe, wobei der eindeutige Schlüssel aus dem gemeinsam genutzten Schlüssel abgeleitet wird, wobei die Steuerung des Zugriffs auf den Knotendatenteil im gemeinsam genutzten Datenspeicherraum (12) durch ein Mitglied der ersten Gruppe auf dem für die erste Gruppe erzeugten gemeinsam genutzten Schlüssel beruht und die Steuerung des Zugriffs auf den Knotendatenteil im gemeinsam genutzten Datenspeicherraum (12) durch ein Mitglied der zweiten Gruppe auf dem für das Mitglied erzeugten eindeutigen Schlüssel beruht.

## Revendications

1. Système de sécurisation de données pour contrôler une distribution de données dans un système informatique distribué (10) comprenant un ensemble de noeuds interconnectés par un système de communication et un espace de stockage de données partagé (12), chaque noeud possédant une partie des données maintenues dans ledit espace de stockage de données partagé ;
dans lequel chaque noeud comprend un gestionnaire de noeud (110) pour contrôler l'accès par des noeuds producteurs et consommateurs à la partie de l'espace de stockage de données partagé que possède le noeud associé, le système de sécurisation de données étant configuré pour associer un premier entre le groupe de noeuds consommateurs et le groupe de noeuds producteurs à un premier niveau de confiance et un second groupe pris entre le groupe de noeuds consommateurs et le groupe de noeuds producteurs à un second niveau de confiance, dans lequel ledit gestionnaire de noeud (110) est configuré pour générer une clé partagée commune pour tous les membres du premier groupe et pour générer une clé unique pour chaque membre du second groupe, ladite clé unique étant dérivée de la clé partagée commune, le gestionnaire de noeud (110) étant en outre configuré pour comntrôler l'accès à la partie de données de noeud dans l'espace de stockage de données partagé (12) par un membre du premier groupe sur la base de la clé partagée commune générée pour le premier groupe et pour contrôler l'accès à la partie de données de noeud dans l'espace de stockage de données partagé (12) par un membre du second groupe sur la base de la clé dérivée unique générée pour ledit membre.

2. Système selon la revendication 1, dans lequel le premier niveau de confiance est plus élevé que le second niveau de confiance, ledit premier groupe comprenant le groupe de consommateurs et ledit second groupe comprenant le groupe de producteurs.

3. Système selon la revendication 2, dans lequel chaque noeud producteur (22) est adapté pour produire des types de données dans l'espace de stockage de données partagé (12) en cryptant lesdits types de données avec la clé dérivée générée pour ledit producteur et en envoyant les types de données cryptés au gestionnaire de noeud, le gestionnaire de noeud (110) étant configuré pour stocker lesdits types de données cryptés dans l'espace de stockage de données partagé (12).

4. Système selon la revendication 3, dans lequel chaque noeud consommateur (24) est adapté pour consommer des types de données à partir de l'espace de stockage de données partagé (12) en recevant lesdits types de données cryptés qui proviennent du gestionnaire de noeud (110) et en décryptant lesdits types de données cryptés en dérivant la clé dérivée pour le producteur de la clé partagée commune.

5. Système selon l'une quelconque des revendications précédentes, dans lequel le gestionnaire de noeud (110) est configuré pour enregistrer un membre du premier groupe ou du second groupe, en réponse à une requête dudit membre et comprenant l'identifiant du membre et un certificat signé par le membre si le certificat signé est déterminé comme étant valide (122, 132).

6. Système selon la revendication 5, dans lequel le gestionnaire de noeud (110) est en outre configuré, si le certificat signé est valide, pour :

   - générer des données de contrôle ;
   - requérir la signature numérique desdites données de contrôle par ledit membre (124, 134) ; et
   - enregistrer ledit membre, en réponse à la signature numérique desdites données de contrôle par ledit membre (125, 135).

7. Système selon la revendication 6, dans lequel ladite signature numérique comprend les données de contrôle signées avec la clé privée dudit membre et l'identifiant dudit membre.

8. Système selon l'une quelconque des revendications 5 à 7, dans lequel le gestionnaire de noeud (110) est configuré pour enregistrer le membre en stockant une information dans un répertoire de membres, ladite information comprenant l'identifiant du membre et la clé publique du membre.

9. Système selon l'une quelconque des revendications 5 à 8 précédentes, dans lequel, en réponse à l'enregistrement d'un membre, le gestionnaire de noeud (110) est configuré pour envoyer audit membre la clé partagée commune cryptée avec la clé publique du membre, si le membre appartient au premier groupe, ou la clé dérivée unique générée pour le membre et cryptée avec la clé publique du membre, si le membre appartient au second groupe.

10. Système selon l'une quelconque des revendications précédentes, dans lequel, en réponse à une requête de consommation d'un ensemble de types de données dudit espace de stockage de données partagé (12) par un noeud consommateur, le gestionnaire de noeud (110) est configuré pour envoyer au noeud consommateur (24) une liste cryptée avec la clé publique du consommateur et avec la clé privée du gestionnaire de noeud (110), ladite liste comprenant un nombre de triplets pour chaque type de données demandé en requête, chaque triplet comprenant :

   - le type de données ;
   - l'identifiant d'objet associé audit type de données ; et
   - la clé publique du producteur qui a produit le type de données.

11. Système selon l'une quelconque des revendications précédentes, dans lequel, en réponse à une requête de production d'un type de données dans ledit espace de stockage de données partagé (12) par un noeud producteur, le gestionnaire de noeud (110) est configuré pour envoyer au noeud producteur (24) l'identifiant d'objet qui est associé audit type de données.

12. Système selon l'une quelconque des revendications précédentes, dans lequel le gestionnaire de noeud est configuré pour désenregistrer un membre du premier groupe ou du second groupe, en réponse à une requête reçue dudit membre (160) et comprenant l'identifiant du membre signé numériquement avec la clé privée du membre.

13. Système selon l'une quelconque des revendications précédentes, dans lequel le gestionnaire de noeud (110) est configuré pour envoyer une information mise à jour provenant de l'espace de stockage de données partagé (12) à un membre du premier groupe ou du second groupe, en réponse à une requête de mise à jour d'information dudit membre et comprenant l'identifiant du membre qui est signé numériquement au moyen de la clé privée du membre, en déterminant si l'identifiant du membre signé numériquement par la clé privée du membre est valide (172), en déterminant l'état de mise à jour des données auxquelles le membre est associé en tant que consommateur ou producteur et en envoyant un message au membre comprenant l'identifiant du membre, une information de contexte et l'information mise à jour.

14. Système selon l'une quelconque des revendications précédentes, dans lequel le gestionnaire de noeud est configuré pour mettre en oeuvre un modèle de publication/d'abonnement pour contrôler les noeuds producteurs et les noeuds consommateurs.

15. Système selon l'une quelconque des revendications précédentes, dans lequel le gestionnaire de noeud (110) est configuré pour révoquer la clé partagée en réponse à une utilisation abusive détectée de ladite clé partagée, et pour générer une nouvelle clé partagée pour les membres enregistrés du premier groupe et de nouvelles clés dérivées respectives pour chaque membre du second groupe.

16. Système selon l'une quelconque des revendications précédentes, dans lequel le gestionnaire de noeud (110) est configuré pour révoquer périodiquement la clé partagée et les clés dérivées, et pour générer une nouvelle clé partagée pour les membres enregistrés du premier groupe et de nouvelles clés dérivées respectives pour chaque membre du second groupe.

17. Procédé de sécurisation de données pour contrôler une distribution de données dans un système informatique distribué (10) comprenant un ensemble de noeuds interconnectés par un système de communication et un espace de stockage de données partagé (12), chaque noeud possédant une partie des données maintenues dans ledit espace de stockage de données partagé,
dans lequel ledit procédé comprend le contrôle de l'accès par des noeuds producteurs et consommateurs à la partie de l'espace de stockage de données partagé (12) que possède le noeud associé, le procédé comprenant l'association d'un premier groupe entre le groupe de noeuds consommateurs et le groupe de noeuds producteurs à un premier niveau de confiance et l'association d'un second groupe entre le groupe de noeuds consommateurs et le groupe de noeuds producteurs à un second niveau de confiance, dans lequel ledit procédé comprend en outre la génération d'une clé partagée commune pour tous les membres du premier groupe et d'une clé unique pour chaque membre du second groupe, ladite clé unique étant dérivée à partir de la clé partagée commune, le contrôle de l'accès à la partie de données de noeud dans l'espace de stockage de données partagé (12) par un membre du premier groupe étant basée sur la clé partagée commune générée pour le premier groupe et le contrôle de l'accès à la partie de données de noeud dans l'espace de stockage de données partagé (12) par un membre du second groupe étant basé sur la clé dérivée unique générée pour ledit membre.

100

NODE (10)

NODE MANAGER
(110)

ACCESS MANAGER
(111)

USER REGISTRY
(112)

NODE (10)

NODE MANAGER
(110)

ACCESS MANAGER
(111)

USER REGISTRY
(112)

SHARED DATA SPACE
(12)

NODE (10)

NODE MANAGER
(110)

ACCESS MANAGER
(111)

USER REGISTRY
(112)

NODE (10)

NODE MANAGER
(110)

ACCESS MANAGER
(111)

USER REGISTRY
(112)

**FIGURE 1**

**FIGURE 2**

EP 2 890 084 B1

DP – Data Producer; DC – Data Consumer; DO – Data Object; DDS-Distributed Data Space

Pub – Publisher; Sub - Subscriber

**FIGURE 3**

**FIGURE 4**

**FIGURE 5**

**FIGURE 6**

**FIGURE 7**

Users authenticate themselves to
Domain (201)

Domain Manager Generates shared
domain key and securely sends it to
all valid consumers (202)

Domain Manager generates derived
keys, one for each producer, and
securely sends them to repective
producer. (203)

Producers encrypt information using
derived key (204)

Consumers decrypt infomation by
determining the producers' derived
key using the Domain key (205)

**FIGURE 8A**

Domain Manager notified of misuse (210)

Domain Manager revokes access to misbehaving user (211)

Domain Manager revokes domain key and informs users that a new key is available (212)

Users contact Domain Manager and receive new domain key (consumer) or derived key (producer) (213)

Domain Manager retains list of old keys (214)

**Figure 8B**

**Consumer**

**Domain manager**

**Identity Manager**

reqConReg(ID;Cert$_{CONS}$)

checkCert(Cert$_{CONS}$)

OK/KO

reqSignNonce(nonce; ID)

respSignNonce({n}K$^{-}_{CONS}$,ID)

insertRecord(ID;Role:cons; K$^{+}_{CONS}$)

respConsReg(ID; {K$_d$}K$^{+}_{CONS}$,[;Cert$_{DM}$])

**FIGURE 9A**

Receiving a Consumer Request (120)

Determining if the consumer signed certificate Cert$_{CONS}$ is valid (121)

Registering the data consumer (122)

Denying registration of the data consumer 24 (123)

Requesting the digital signing of control parameters by the data consumer (124).

Reception of the control parameters digitally signed consumer with          by consumer (125)

Recording insertion of the consumer  using the consumer ID and the  key (126)

Sending a registration message to the consumer comprising Cert$_{DM}$ and (127)

**FIGURE 9B**

Producer        Domain manager        Identity Manager

$reqProdReg(ID;Cert_{PROD})$

$checkCert(Cert_{PROD})$

OK/KO

$insertRecord(ID;Role:cons;\ K^{+}_{CONS})$

$respProdReg(ID;\ \{K_{dev}\}K^{+}_{PROD},[;Cert_{DM}])$

**FIGURE 10A**

Receiving a Producer registration request (130)

Determining if the producer signed certificate Cert$_{PROD}$ is valid (131)

Registering the data producer (132)

Denying registration of the data producer (133)

Requesting the digital signing of a "nonce" value by the data producer (134).

Receiving of the control parameters digitally signed with          by producer (135)

Recording insertion of the producer using the producer ID and the Producer public key K$^{+}$$_{PROD}$ (136)

Sending a registration message to the producer comprising Cert$_{DM}$ and                    (137)

**FIGURE 10B**

Consumer                    Domain manager                    Producer

$reqDOID(\{Type_1, Type_2,...\},$

$DOID = pubDataType(Type;Data)$

$H(\{Type_1, Type_2, ...\})K_d)$

$respDOID(\{\{\{Type_1, DOID_1;K^+_{PROD1}\},$

resPubDataType(DOID)

$\{Type_2;DOID_2;K^+_{PROD2}\}, ...\}K^+_{CONS}\}K^-_{DM})$

Subscribing to Data Objects          Publishing Data Objects

**FIGURE 11A**

Receiving a data type subscription request form a consumer to specific data types [T1, T2, ...] (140)

Recording the subscription (141)

Sending a response message to the consumer, comprising a list comprising {Ti, DOIDi,     } for each topic Ti, the list being encrypted using and    (142)

**FIGURE 11B**

Receiving a request for publishing a data type T1 from a producer (150)

↓

Publishing the data type (151)

↓

Sending a response message to the producer using the Domain Object Identifier DOID (152)

**FIGURE 12**

Receiving a request for deregistering a consumer comprising consumer ID signed by consumer private key (160)

↓

Deregistering the data consumer (161)

↓

Notifying the access manager of the deregistration (162)

**FIGURE 13**

Sending an update notification message to a producer
or consumer  (170)

Receiving a domain information update request from
the consumer or producer using the ID digitally signed
by            (171)

Checking the identifier digitally signed by the private key
of the consumer or producer               (172)

Checking the identifier digitally signed by the private key
of the consumer or producer               (173)

If the identifier digitally signed by the private key is valid,
to retrieve an update status of the subscribed or
published information (174)

Sending the updated data to the consumer or producer
(175)

**FIGURE 14**

Data space partitioning

Clearance
hierarchy

**FIGURE 15**

Keys Hierarchy

**FIGURE 16**

**FIGURE 17**

**EP 2 890 084 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004250060 A

### Non-patent literature cited in the description

- **R. S. SANDHU ; E. J. COYNE ; H. L. FEINSTEIN ; C. E. YOUMAN.** Role-Based Access Control Models. *IEEE Computer,* February 1996, vol. 29 (2), 38-47
- **I. FOSTER ; C. KESSELMAN.** Globus: A Metacomputing Infrastructure Toolkit. *The International Journal of Supercomputer Applications and High Performance Computing,* 1997, vol. 11 (2), 115-128
- Introduction of the Domain Issuer in OMA DRM. **PAUL KOSTER et al.** CONSUMER COMMUNICATIONS AND NETWORKING CONFERENCE, 2007, CCNC 2007. IEEE, 01 January 2007, 940-944
- Fully homomorphic encryption using ideal lattices. **C. GENTRY.** In Proc. of the 41st annual ACM symposium on Theory of computing (STOC '09). ACM, 2009, 169-178
- Security-by-Contract: Toward a Semantics for Digital Signatures on Mobile Code. Public Key Infrastructure. **N. DRAGONI ; F. MASSACCI ; K. NALIUKA ; I. SIAHAAN.** LNCS. Springer Verlag, 2007, vol. 4582, 297-312
- Security Monitor Inlining for Multithreaded Java. ECOOP 2009 - Object-Oriented Programming. **M. DAM ; B. JACOBS ; A. LUNDBLAD ; F. PIESSENS.** LNCS. Springer Verlag, 2009, vol. 5653, 546-569
- **A.R. NEWMAN.** Confidence, pedigree, and security classification for improved data fusion. *Information Fusion, 2002. Proceedings of the Fifth International Conference on,* 2002, vol. 2, 1408-1415
- **FRAIM, LESTER J.** SCOMP: A solution to the multilevel security problem. *Computer,* 1983, vol. 16 (7), 26-34
- Design and verification of secure systems. **RUSHBY, JOHN M.** ACM SIGOPS Operating Systems Review. ACM, 1981, vol. 15, 12-21